# FASCICULE DE BREVET EUROPEEN

(11) **EP 4 313 572 B1**
(45) Date de publication et mention de la délivrance du brevet: **07.05.2025**
(21) Numéro de dépôt: 22714904.4
(22) Date de dépôt: 17.03.2022
(51) Int. Cl.: B29D 30/24

(54) **DISPOSITIF DE CONFORMATION DE BANDAGE PNEUMATIQUE COMPRENANT UN SYSTEME D'ASSISTANCE CONDITIONNELLE A LA ROTATION DES FLASQUES PORTANT LES TALONS DU BANDAGE**
VORRICHTUNG ZUR FORMUNG EINES LUFTREIFENS MIT EINEM SYSTEM ZUR BEDINGTEN UNTERSTÜTZUNG DER DREHUNG DER FLANSCHE MIT DEN WULSTEN DES REIFENS
DEVICE FOR SHAPING A PNEUMATIC TYRE COMPRISING A CONDITIONAL ASSISTANCE SYSTEM FOR THE ROTATION OF THE FLANGES CARRYING THE BEADS OF THE TYRE

(30) Priorité: 29.03.2021 FR 2103191
(43) Date de publication de la demande: 07.02.2024
(73) Titulaire: COMPAGNIE GENERALE DES ETABLISSEMENTS MICHELIN, 63000 Clermont-Ferrand (FR)
(72) Inventeur: ROBIN, Vincent, 63040 Clermont-Ferrand Cedex 9 (FR)
(74) Mandataire: M.F.P. Michelin
(86) Numéro de dépôt international: PCT/FR2022/050493
(87) Numéro de publication internationale: WO 2022/207993

(56) Documents cités:
- EP-A1- 0 505 813
- WO-A1-2011/019272
- DE-B- 1 120 113
- US-A- 3 503 829

## Description

La présente invention concerne le domaine général de la fabrication des bandages destinés à équiper des roues de véhicules, et plus particulièrement la fabrication des bandages pneumatiques.

Il est connu de fabriquer des bandages pneumatiques selon un processus qui comprend une étape de confection dite « confection à plat » au cours de laquelle on réalise un premier sous-ensemble annulaire de bandage, dit « bloc carcasse », en enroulant successivement sur un tambour cylindrique plusieurs composants parmi lesquels au moins une nappe carcasse pourvue de fils de renfort qui s'étendent axialement d'un talon à l'autre du bandage, puis une étape de conformation au cours de laquelle on provoque, par exemple par gonflage, une expansion radiale du bloc carcasse, tout en rapprochant axialement les talons l'un de l'autre, de sorte à conférer au bloc carcasse une forme torique, puis une étape de finition au cours de laquelle on pose sur ledit bloc carcasse ainsi conformé les éléments constitutifs du sommet du bandage, parmi lesquels la bande de roulement (voir par exemple les documents EP 0505813 A1, US 3,503,829 et DE 1120113 B).

Dans certains cas, l'étape de conformation doit s'accompagner d'une rotation des talons l'un par rapport à l'autre, autour de l'axe central du tambour, du fait que les fils de renfort de la nappe qui sont situés dans les portions du bloc carcasse qui correspondent aux flancs du bandage se radialisent, c'est-à-dire modifient progressivement, au fur et à mesure de l'expansion radiale du bloc carcasse, leur orientation en azimut autour de l'axe central du tambour afin de se rapprocher de, puis d'atteindre, une orientation radiale, dans laquelle lesdits fils de renfort sont portés par des plans radiaux contenant ledit axe central du tambour.

Ceci peut notamment être le cas si la nappe carcasse est initialement disposée sur le tambour d'une façon telle que les fils de renforts parallèles qu'elle contient ne sont pas exactement parallèles à l'axe de rotation du tambour, et donc disposés en oblique par rapport aux lignes génératrices du cylindre, ou bien encore lorsque l'on fabrique un bandage dit « à sommet polarisé », tel que décrit dans le brevet FR-1 413 102 déposé par la demanderesse, en disposant sur la nappe carcasse, dans la portion dite « sommitale » de ladite nappe carcasse qui est destinée à se retrouver sous le sommet du bandage, et avant l'étape de conformation, une nappe de renfort qui contient des fils de renforts parallèles entre eux et qui sont orientés par rapport à la direction circonférentielle du tambour selon un angle différent de celui des fils de renfort de la nappe carcasse, de sorte que, lors de l'expansion radiale, les fils de renfort de la nappe de renfort interagissent avec les fils de renfort de la portion sommitale de la nappe carcasse, de telle manière que les angles des différents fils de renfort ainsi entrecroisés se modifient dans la zone sommitale, tandis que les fils de renfort des portions latérales de la nappe carcasse, situés dans les flancs, se radialisent.

Or, lors de l'opération de conformation, il est parfois difficile d'accompagner de façon satisfaisante la rotation des talons par une rotation appropriée des flasques du tambour, pour assurer une radialisation correcte des renforts de flancs.

En effet, si l'on se contente de laisser les flasques en libre rotation, pour permettre aux renforts de se radialiser spontanément par simple effet de vrillage naturel du bandage lors de l'expansion radiale, on obtient finalement une configuration assez peu précise et peu reproductible des fils de renforts dans les flancs, car il est difficile de maîtriser précisément l'orientation azimutale desdits fils de renfort en fin d'opération, eu égard au fait que le couple qui tend à aligner les fils de renfort selon les plans radiaux diminue au fur et à mesure de l'expansion radiale et est d'autant plus faible que lesdits fils de renfort s'approchent d'une orientation radiale.

A l'inverse, si l'on décide d'asservir par des moyens motorisés la rotation des flasques en fonction de leur rapprochement axial, de sorte que l'on force les flasques à adopter une position angulaire précise en fonction de la distance qui les sépare axialement, alors on peut certes obtenir une orientation radiale précise, reproductible et stable des fils de renfort des flancs en configuration finale torique mais, en revanche, on tend à contrarier, notamment au début de l'opération d'expansion radiale, le libre positionnement des composants du bandage, ici du bloc carcasse, au risque de déformer irréversiblement ou de dégrader lesdits composants par cisaillement en torsion, notamment au voisinage des talons.

Les objets assignés à l'invention visent par conséquent à remédier aux inconvénients susmentionnés et proposer un dispositif selon la revendication 1, et un procédé selon la revendication 10, permettant de réaliser de manière fiable, précise, reproductible, et respectueuse du bandage, une opération de conformation qui implique une modification de l'orientation azimutale des fils de renfort des flancs du bandage, et plus particulièrement une radialisation desdits fils de renfort, notamment dans le cadre de la fabrication d'un bandage dit « à sommet polarisé » tel que mentionné plus haut.

Les objets assignés à l'invention sont atteints au moyen d'un dispositif de conformation de bandage comprenant un premier flasque destiné à recevoir un premier talon d'un bandage, un second flasque destiné à recevoir un second talon dudit bandage, un mécanisme de translation permettant de déplacer le premier flasque et/ou le second flasque en translation le long d'un axe central commun afin de modifier la distance dite « entraxe » qui sépare axialement le premier flasque du second flasque, de manière à pouvoir rapprocher axialement les flasques l'un de l'autre, et donc les talons l'un de l'autre, pour accompagner une expansion radiale du bandage, un mécanisme de rotation qui permet une rotation du premier flasque et/ou du second flasque autour de l'axe central de sorte à permettre une modification de la position angulaire azimutale relative du premier flasque par rapport au second flasque, dite « écart angulaire », ledit dispositif étant caractérisé en ce qu'il comprend un système de commande agencé pour appliquer une loi de commande qui comprend un mode de fonctionnement dit « mode d'assistance conditionnelle », selon lequel i) sur une première plage d'entraxes prédéterminée, dite « premier domaine d'application », la loi de commande associe, à chaque valeur d'entraxe dudit premier domaine d'application, une plage d'écarts angulaires autorisés, dite « domaine autorisé », qui possède une amplitude prédéterminée délimitée par une frontière basse et une frontière haute distincte de la frontière basse, et selon lequel ii) lorsque l'on opère un rapprochement axial mutuel des flasques et que l'entraxe passe ainsi par le premier domaine d'application, le mécanisme de rotation reste passif si l'écart angulaire se trouve à l'intérieur du domaine autorisé, de manière à laisser le premier flasque et le second flasque à même d'opérer une libre rotation relative l'un par rapport à l'autre sous l'effet de la réaction naturelle du bandage à l'expansion radiale dudit bandage et au rapprochement axial mutuel desdits flasques, et ledit mécanisme de rotation déclenche sélectivement une assistance à la rotation si l'écart angulaire atteint l'une des frontières du domaine autorisé ou sort dudit domaine autorisé, afin de piloter activement la rotation relative des flasques de manière à forcer l'écart angulaire à se maintenir ou à revenir dans ledit domaine autorisé.

Avantageusement, l'invention combine les avantages de la rotation naturelle libre et de la rotation asservie, en offrant une solution mixte qui privilégie, autant que possible, comme mode de fonctionnement par défaut, la rotation naturelle libre, mais qui dispose à tout moment de la possibilité d'activer une assistance si nécessaire, pour passer d'une rotation libre à une rotation asservie, et qui conditionne l'activation de l'assistance, c'est-à-dire la mise en œuvre d'un actionneur, distinct du bandage, pour exercer sur l'un et/ou l'autre des flasques un effort contribuant à entraîner activement ledit flasque en rotation, à la détection d'une situation qui signale que le bandage ne présente pas les capacités intrinsèques, dans les conditions de rapprochement des flasques et d'expansion radiale données auxquelles ledit bandage est soumis à l'instant considéré, pour assurer à lui seul une orientation spontanée satisfaisante des flasques et donc des fils de renfort de la nappe carcasse.

En effet, le mode d'assistance conditionnelle selon l'invention permet de déclencher l'assistance à la rotation des flasques lorsque, et seulement lorsque, l'on sort ou l'on s'apprête à sortir du domaine autorisé, c'est-à-dire lorsque, et seulement lorsque, l'on détecte que, dans la dynamique du mouvement d'expansion radiale du bandage et de rapprochement axial des talons, le positionnement angulaire des flasques qui est induit par la réaction naturelle spontanée du bandage concerné, et donc l'écart angulaire effectif, n'est pas conforme à celui qui serait attendu pour garantir l'intégrité physique du bandage et/ou une orientation convenable des fils de renforts.

En particulier, l'invention permet de déclencher l'assistance à la rotation des flasques lorsque l'on détecte que le bandage à lui seul ne génère pas un effort circonférentiel suffisant au niveau des talons pour entraîner sans assistance une rotation relative des flasques qui soit adéquate, si bien que la rotation relative des flasques est « en retard », c'est-à-dire d'une ampleur insuffisante compte-tenu du niveau de rapprochement des flasques, ce qui peut indiquer que l'on se trouve dans une situation qui correspond soit à une faiblesse ou une trop grande plasticité du bandage, qui ne peut par conséquent exercer sur le flasque un couple de rotation suffisamment élevé sans risquer lui-même une déformation et un endommagement, soit à une insuffisance de couple d'alignement radial due à une configuration géométrique ou dimensionnelle défavorable, comme cela est typiquement le cas en fin de conformation, à la fin de la course en rapprochement axial mutuel des flasques, lorsque les fils de renfort de la nappe carcasse sont quasiment alignés sur les plans radiaux et n'opèrent donc quasiment plus d'effet levier.

Avantageusement, la nature conditionnelle de l'assistance confère au système de commande un caractère adaptatif, en ceci que ledit système de commande n'impose pas aveuglément une assistance motorisée qui serait reproduite de façon systématique et strictement identique d'un bandage à l'autre, mais subordonne au contraire le déclenchement de l'assistance à la réalisation de certaines conditions, selon des critères prédéfinis, ici selon un critère d'appartenance ou de non-appartenance à un domaine autorisé, et adapte ainsi au cas par cas la mise en œuvre d'une éventuelle assistance, en fonction du comportement et des réactions individuels du bandage concerné, et en particulier de l'écart angulaire effectifs, tels que ces paramètres sont constatés effectivement au moment de la conformation.

Ainsi, bien que, pour conformer successivement plusieurs bandages d'un même modèle au cours d'une même série de fabrication, le système de commande applique une même loi de commande standardisée, établie pour ledit modèle de bandage, le déroulement effectif de la conformation, et notamment le déclenchement ou non de l'assistance, et le cas échéant le point de déclenchement effectif de l'assistance, c'est-à-dire la valeur d'entraxe à laquelle le système de commande détectera un besoin d'assistance (c'est-à-dire une sortie du domaine autorisé) et déclenchera donc l'assistance, pourront varier d'un bandage de la série à un autre bandage de la même série, en fonction des réactions propres de chaque bandage au processus de conformation, et seront donc « personnalisés » et donc optimisés pour chaque bandage individuellement, au cas par cas.

En particulier, il est possible que, pour une même valeur d'entraxe effective mesurée, c'est-à-dire à un même point d'avancement du processus de conformation, un premier bandage présente un premier écart angulaire conforme, situé dans le domaine autorisé défini pour cette valeur d'entraxe, de sorte que le système de commande laissera les flasques en libre rotation, et poursuivra le cas échéant le rapprochement axial des flasques, sans déclencher d'assistance, tandis qu'un second bandage du même modèle et de la même série présentera un second écart angulaire non conforme, situé à la frontière voire hors du domaine autorisé, de sorte que le système de commande déclenchera l'assistance pour forcer les flasques à s'orienter convenablement, tandis que, le cas échéant, le rapprochement axial des flasques se poursuivra.

L'invention permettra donc d'optimiser la qualité de la conformation tout en s'assurant d'un parfait respect de l'intégrité et donc de la qualité du bandage.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre une loi de commande selon l'invention, qui associe à une valeur d'entraxe, en abscisse, une valeur ou une plage de valeurs d'écart angulaire autorisé, en ordonnées.
La figure 2 illustre, selon une vue en perspective, un dispositif de conformation de bandage selon l'invention.
La figure 3 illustre un guide mécanique utilisant une rainure qui matérialise la loi de commande en guidant un doigt solidaire d'un flasque.
La figure 4 illustre, selon une vue en perspective écorchée, une variante du dispositif de conformation de la figure 2, au sein de laquelle chacun des premier et second flasques est guidé par un guide mécanique à rainure de la figure 3.
La figure 5 illustre, selon une vue de détail avec coupe partielle dans un plan radial vertical, le dispositif de conformation de la figure 4. Sur cette vue, on a représenté schématiquement les parties pleines du premier flasque, que l'on a masquées sur d'autres vues pour une meilleure compréhension du dispositif.
La figure 6 illustre, selon une vue en perspective écorchée, le dispositif de conformation des figures 4 et 5 dans une configuration initiale correspondant à une valeur d'entraxe pour laquelle le bandage se trouve « à plat », dans une forme cylindrique, avant l'opération de conformation.
La figure 7 est une vue schématique du guide mécanique coopérant avec deux doigts associés à un flasque, dans la configuration initiale des figures 5 et 6, et dans une première configuration de blocage qui empêche la rotation du flasque.
La figure 8 est une vue de détail en perspective du dispositif des figures 6 et 7, sur laquelle le premier flasque a été retiré pour faire apparaître les doigts coopérant avec le guide mécanique.
La figure 9 illustre, selon une vue de dessus, une première phase de la conformation, dans laquelle le doigt associé au flasque est extrait axialement de la position de blocage, et pénètre dans le domaine d'application du mode d'assistance conditionnelle.
La figure 10 est une vue schématique du guide mécanique et des doigts dans la configuration de la figure 9.
La figure 11 illustre, selon une vue en perspective, le dispositif de conformation des figures 2, 4, 5 et 6 dans une configuration intermédiaire, pendant l'opération de conformation, dans laquelle les flasques ont été rapprochés axialement l'un de l'autre de sorte que la valeur d'entraxe se trouve dans le domaine d'application du mode d'assistance conditionnelle, et les flasques ont pivoté en rotation, tout en conservant ici un écart angulaire conforme au domaine autorisé par la loi de commande.
La figure 12 est une vue schématique du guide mécanique et des doigts dans la configuration intermédiaire de la figure 11, dans laquelle les doigts sont flottants entre les deux bords latéraux opposés de la rainure qui matérialisent les frontières du domaine autorisé.
La figure 13 est une vue de détail en perspective du dispositif des figures 11 et 12, sur laquelle le premier flasque a été retiré pour faire apparaître les doigts coopérant avec le guide mécanique.
La figure 14 illustre, selon une vue en perspective écorchée, le dispositif des figures 4, 5, 6 et 11 dans une configuration finale, à la fin de l'opération de conformation, dans laquelle un doigt associé au flasque est arrivé en butée contre la rainure du guide mécanique et s'est engagé dans une extension axiale de ladite rainure qui bloque la rotation du flasque dans la position angulaire souhaitée.
La figure 15 est une vue schématique du guide mécanique et des doigts dans la configuration finale de la figure 14.
La figure 16 est une vue de côté, en coupe dans un plan radial vertical contenant l'axe central de rotation des flasques, du dispositif des figures 4, 5, 6, 11 et 14 dans une configuration de déploiement, dans laquelle on a déployé radialement des bras basculants qui sont portés par les flasques et dont les extrémités libres sont pourvues de roulettes, afin de retrousser les bords de la nappe carcasse par-dessus les tringles du bandage, et de plaquer lesdits bords de la nappe carcasse contre les portions de ladite nappe carcasse formant les flancs.
La figure 17 est une vue schématique du guide mécanique et des doigts dans la configuration de déploiement de la figure 16, dans laquelle lesdits doigts ont été écartés axialement l'un de l'autre afin de provoquer le basculement des bras.
La figure 18 illustre, selon une vue en perspective écorchée faisant apparaître le guide mécanique associé au premier flasque, le dispositif de la figure 16 en configuration de déploiement.

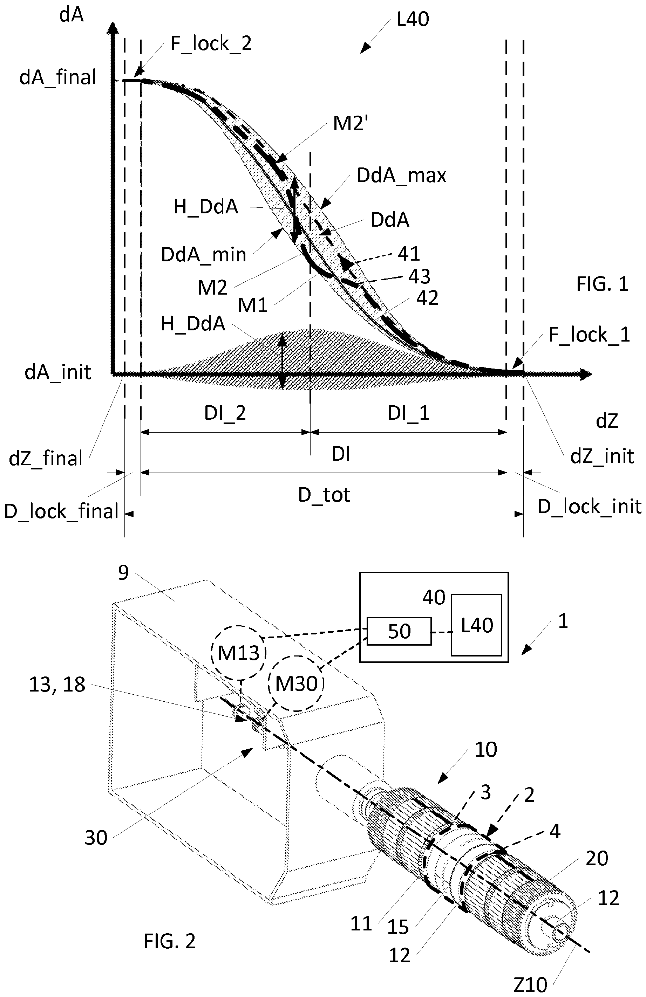

La présente invention concerne un dispositif 1 de conformation de bandage 2, tel qu'illustré notamment sur la figure 2.

Ledit bandage 2 est destiné à équiper une roue de véhicule, et constitue de préférence un bandage pneumatique.

De façon connue en soi, ledit bandage 2 comprend un premier talon 3 et un second talon 4 qui sont destinés à permettre l'accroche du bandage 2 sur un support de montage tel qu'une jante. En l'espèce, l'invention visera notamment à réaliser des bandages dont le diamètre de montage sur la jante est compris entre 13 pouces et 24 pouces, voire plus particulièrement entre 16 pouces et 22 pouces.

Chaque talon 3, 4 est pourvu chacun d'une tringle, par exemple formée d'une tresse de fil métallique ou de plusieurs spires de fil de renfort enroulées sur elles-mêmes, de sorte que ladite tringle forme un cerclage annulaire inextensible.

De façon connue en soi, une nappe carcasse, pourvue de fils de renfort parallèles entre eux, s'étend d'un talon 3 à l'autre talon 4, de manière à ce que les fils de renfort relient une tringle à l'autre, et forment ainsi une partie de l'armature du bandage 2.

Le bandage 2 présente une forme de révolution autour d'un axe dit « axe central » Z2 qui correspond sensiblement, en pratique, à l'axe de rotation de la roue sur lequel sera monté ledit bandage. Cet axe central Z2 définit trois directions classiquement utilisées par l'homme du métier : une direction axiale, une direction radiale, et une direction circonférentielle.

Par « direction axiale », on entend une direction colinéaire (c'est-à-dire parallèle, au sens vectoriel) à l'axe central Z2 du bandage 2, et donc parallèle à l'axe de rotation du bandage.

Par « direction radiale », on entend une direction qui s'étend selon un rayon du bandage, c'est-à-dire une direction quelconque qui est sécante et perpendiculaire à l'axe central Z2.

Par « direction circonférentielle », on entend une direction qui est perpendiculaire à la fois à la direction axiale et à un rayon du bandage, et qui correspond donc, dans un plan normal à l'axe central Z2, à la tangente à un cercle dont le centre est sur l'axe de rotation du bandage.

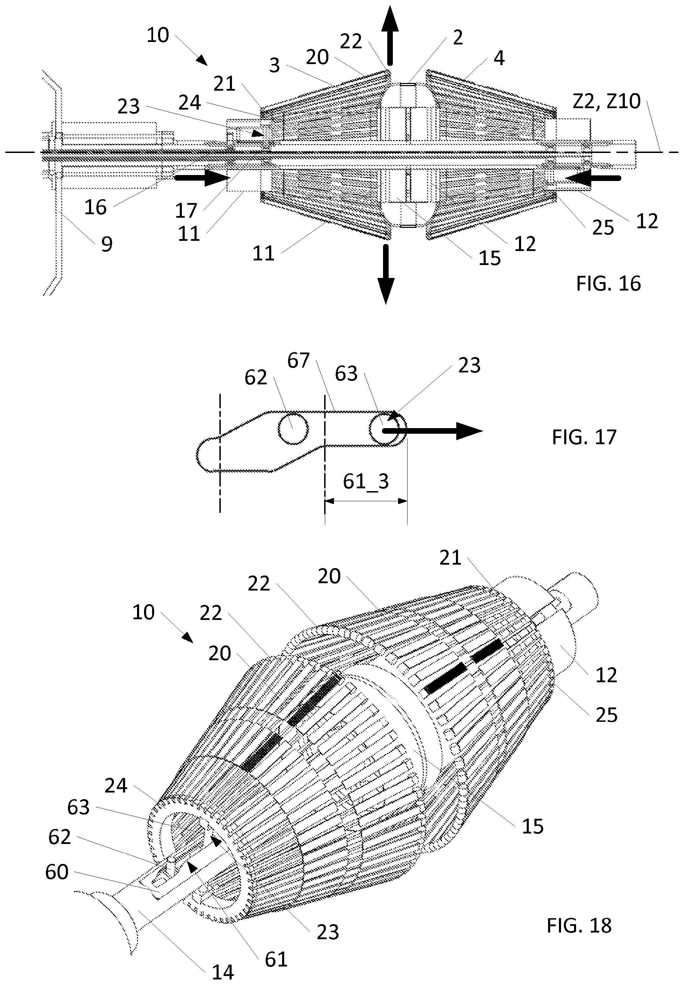

L'opération de conformation est l'opération qui consiste à provoquer une expansion radiale du bandage 2, ici plus particulièrement d'un sous-ensemble du bandage dit « bloc carcasse » comprenant au moins la nappe carcasse, par exemple en injectant à l'intérieur du bandage 2, ici plus particulièrement à l'intérieur du bloc carcasse, un gaz sous une pression supérieure à la pression atmosphérique ambiante, et en rapprochant axialement les talons 3, 4 l'un de l'autre, de sorte que l'on fait passer ledit bandage 2, ici plus particulièrement le bloc carcasse, d'une configuration initiale dans laquelle ledit bandage, ici le bloc carcasse, présente une forme de cylindre droit, tel que cela est illustré en pointillés sur les figures 2, 5 et 6, et dans laquelle les fils de renfort de la nappe carcasse situés dans les flancs du bandage sont non radialisés, à une configuration finale dans laquelle ledit bandage 2, ici le bloc carcasse, présente une forme torique, tel que cela est visible sur la figure 16, et dans laquelle les fils de renfort de la nappe carcasse situés dans les flancs du bandage sont radialisés.

De façon connue en soi, une fois le bandage 2, et plus précisément le bloc carcasse, conformé, on pourra rapporter sur ledit bandage 2 un bloc sommet comprenant au moins la bande de roulement, ainsi que le cas échéant un ou plusieurs éléments d'armature, tels que des nappes de renfort et/ou une frette formée d'un enroulement hélicoïdal de spires de renfort circonférentielles. Le bandage complet, dit aussi « bandage cru », ainsi obtenu sera ensuite placé dans un moule de cuisson afin de vulcaniser les composants dudit bandage 2 qui sont à base de caoutchouc.

Par simple concision et commodité de description, dans ce qui suit, on pourra désigner indifféremment par « bandage » 2 le bloc carcasse qui est destiné à subir l'opération de conformation, le bloc carcasse conformé qui résulte de l'opération de conformation, ou le bandage complet obtenu après assemblage du bloc sommet sur le bloc carcasse conformé, en fonction du contexte ou lorsqu'il n'est pas utile de distinguer entre ces éléments.

Selon une possibilité préférée de mise en œuvre, le bandage 2 sera un bandage à sommet polarisé tel que décrit en préambule, pour la fabrication duquel on utilisera l'opération de conformation afin de modifier l'orientation des fils de renfort de la nappe carcasse dans la zone sommitale du bloc carcasse, en appliquant, avant et pendant l'opération de conformation, contre la portion de ladite nappe carcasse destinée à former ladite zone sommitale, une structure de polarisation, qui pourra être soit intégrée au dispositif de conformation, soit formée d'une nappe de renfort superposée à la nappe carcasse et destinée à intégrer à demeure le bandage. Ladite structure de polarisation comprendra elle aussi des fils de renforts parallèles entre eux et positionnés par rapport à la direction circonférentielle du bandage selon un angle différent de l'angle des fils de renfort de la nappe carcasse, de sorte à provoquer, lors de l'expansion radiale du bloc carcasse, une réorientation des fils de renforts de la nappe dans la zone sommitale. Le bloc sommet viendra ensuite figer les fils de renforts dans l'orientation ainsi obtenue.

Le dispositif 1 comprendra, de façon connue en soi, un bâti 9 qui porte un tambour 10, lequel tambour 10 est monté en rotation par rapport au bâti 9 selon son axe central Z10 qui correspond ici à son axe longitudinal. En pratique, l'axe central Z10 du tambour coïncide avec l'axe central Z2 du bandage 2 qui est en cours de fabrication et/ou de conformation sur le tambour 10, de sorte que, par commodité de description, on pourra assimiler ces deux axes l'un à l'autre, sous une même référence Z10.

Le tambour 10, et donc plus globalement le dispositif 1, comprend un premier flasque 11 destiné à recevoir le premier talon 3 du bandage 2, et un second flasque 12 destiné à recevoir le second talon 4 dudit bandage 2.

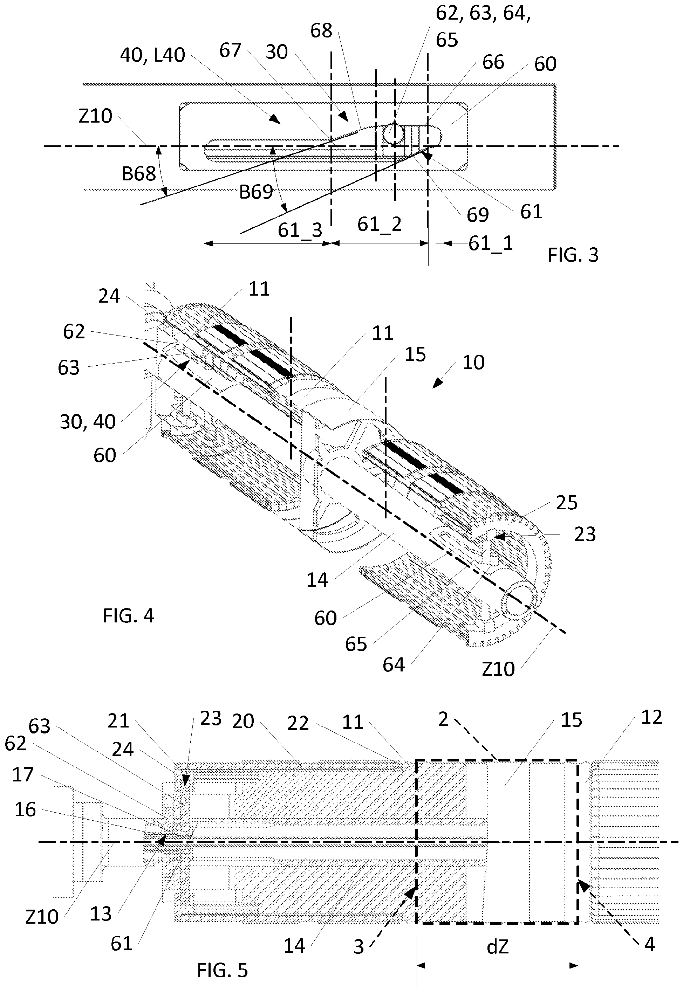

De préférence, tel que cela est notamment visible sur la figure 5, chaque flasque 11, 12 présentera à cet effet une gorge annulaire, formant un siège pour recevoir les éléments constitutifs respectivement du premier et du second talon 3, 4, à savoir ici en particulier d'une part la nappe carcasse, et d'autre part, par-dessus la nappe carcasse, dans une position reproductible, une tringle ou bien un complexe comprenant une tringle associée à une garniture en caoutchouc.

Le dispositif 1 comprend également un mécanisme de translation 13 permettant de déplacer le premier flasque 11 et/ou le second flasque 12 en translation le long d'un axe central Z10 commun, qui correspond ici à l'axe central Z10 du tambour 10, afin de modifier la distance dite « entraxe » dZ qui sépare axialement le premier flasque 11 du second flasque 12, et plus précisément qui sépare axialement le premier talon 3 du second talon 4 du bandage 2, de manière à pouvoir rapprocher axialement les flasques 11, 12 l'un de l'autre, et donc les talons 3, 4 du bandage 2 l'un de l'autre, pour accompagner une expansion radiale du bandage 2.

De préférence, le mécanisme de translation 13, et plus globalement le tambour 10 et donc le dispositif 1, comprend un fût 14 qui matérialise l'axe central Z10 et qui guide les premier et second flasques 11, 12 en translation, mais également en rotation. Le fût 14 est lui-même porté par le bâti 9 et monté en rotation autour de l'axe central Z10 par rapport audit bâti 9.

De façon connue en soi, et tel que cela est illustré sur la figure 2, le mécanisme de translation 13 pourra comprendre un moteur M13 d'entraînement en translation, de préférence un moteur électrique, qui agira sur les flasques 11, 12 afin de déplacer les flasques 11, 12 en coulissement le long du fût 14, par exemple, tel que cela est visible sur la figure 5, au moyen de tringles 16, 17 qui sont entraînées en translation par le moteur M13, de préférence par l'intermédiaire d'un système de conversion de mouvement à vis-écrou 18 logé dans le bâti 9. Le couplage entre le flasque 11, 12 et la ou les tringles 16, 17 pourra être réalisé au moyen d'un ou plusieurs doigts 62, 63, 64, 65 qui seront décrits plus en détail dans ce qui suit.

La valeur de l'entraxe dZ pourra être mesurée ou évaluée par tout moyen approprié, par exemple au moyen de capteurs associés aux flasques 11, 12 ou au mécanisme de translation 13, notamment au moteur M13 d'entraînement qui actionne ledit mécanisme de translation 13, et qui mesureront la position axiale de chacun desdits flasques11, 12 ou permettront de déduire la position axiale des flasques 11, 12 à partir de la position angulaire de l'arbre du moteur M13.

Par ailleurs, le tambour 10 pourra comprendre une virole 15 centrale, qui est emboîtée à coulissement sur les flasques 11, 12 de manière à chevaucher une extrémité de chaque flasque 11, 12, et ainsi former un pont qui assure la continuité de la surface apparente du tambour 10 entre les deux flasques 11, 12. De la sorte, la virole 15 forme notamment un support pour la pose « à plat » des composants du bloc carcasse lors de la confection du bandage 2 sur le tambour 10, et peut accommoder les variations d'entraxe dZ lors des déplacements axiaux des flasques 11, 12.

Tel que cela est notamment visible sur les figures 5, 16 et 18, le tambour 10 comprend de préférence des bras 20, qui sont montés en étoile sur chaque flasque 11, 12, et articulés en pivot 21 sur lesdits flasques 11, 12 de manière à pouvoir alternativement se déployer radialement (figures 16 et 18) et se rétracter (figures 2, 4, 5, 6, 11) en basculant par rapport à l'axe central Z10.

Les extrémités libres desdits bras 20 portent des roulettes 22, de sorte que lorsque l'on déploie radialement les bras 20 et que l'on rapproche axialement les flasques 11, 12 l'un de l'autre, les roulettes 22 réalisent une opération de retroussage, qui consiste à rabattre par-dessus les tringles les pans de la nappe carcasse qui forment les extrémités axiales de ladite nappe carcasse, pans qui portent de préférence un ou des composants destinés à entrer dans la constitution des flancs du bandage 2, et à presser lesdits pans contre les portions correspondantes de la nappe carcasse qui formeront les flancs du bandage 2.

Ces bras 20 à roulettes 22 peuvent également servir à rabattre et à rouleter la partie radialement externe des flancs sur le bloc sommet, après pose dudit bloc sommet sur le bloc carcasse conformé, afin d'assurer une bonne cohésion du bloc sommet avec le bloc carcasse, avant que le bandage cru ne soit envoyé en cuisson.

On pourra utiliser tout mécanisme de déploiement 23 approprié pour contrôler le basculement des bras 20. A titre d'exemple, tel que cela est illustré sur les figures 5 et 16, on pourra à cet effet prévoir sur le flasque 11, 12 concerné une couronne 24, 25 guidée en translation sur ledit flasque, et dont le déplacement axial relatif par rapport audit flasque 11, 12 provoquera, au moyen d'un embiellage adapté, le basculement des bras 20.

Par ailleurs, le dispositif 1 comprendra de préférence un système de gonflage (non représenté), conçu pour injecter un fluide, de préférence de l'air, sous une pression supérieure à la pression atmosphérique ambiante, dans l'espace annulaire situé entre les flasques 11, 12 et dont la limite radiale externe est formée par le bandage 2 à conformer. Ainsi, le gonflage contribuera à l'expansion radiale du bandage 2, et soutiendra avantageusement ledit bandage 2 dans sa configuration torique, notamment lors de la pose du bloc sommet.

Le dispositif 1 comprend également un mécanisme de rotation 30 qui permet une rotation du premier flasque 11 et/ou du second flasque 12 autour de l'axe central Z10 de sorte à permettre une modification de la position angulaire azimutale relative du premier flasque 11 par rapport au second flasque 12, dite « écart angulaire » dA.

En pratique, si la position angulaire A11 du premier flasque 11 et la position angulaire A12 du second flasque 12 sont mesurées par rapport à une même origine et dans un référentiel commun, par exemple le référentiel attaché au bâti 9, alors l'écart angulaire dA représentera la valeur algébrique de la différence entre la position angulaire A11 du premier flasque et la position angulaire A12 du second flasque 12 (en tenant compte des signes de chacune de ces valeurs) : dA = A11 - A12.

L'écart angulaire dA pourra être évalué ou mesuré par tout moyen approprié, par exemple en mesurant les positions angulaires respectives A11, A12 du premier flasque 11 et du second flasque 12 au moyen d'un capteur angulaire, du type codeur ou resolver.

Par convention, la position angulaire A11, A12 d'un flasque pourra être de signe positif lorsqu'elle correspond à une rotation dans le sens anti-horaire (sens trigonométrique), et de signe négatif lorsqu'elle correspond à une rotation dans le sens horaire.

Par convention, on pourra considérer que, dans la configuration initiale, le bandage étant « à plat », les deux flasques 11, 12 sont alignés sur leur origine angulaire commune, de sorte que l'écart angulaire initial est nul : dA_init = 0 deg.

En pratique, dans la configuration finale, le bandage 2 se trouvant dans sa forme torique, et les fils de renfort de la nappe carcasse étant radialisés, l'écart angulaire final dA_final dépendra de l'architecture et des dimensions du bandage 2, et notamment de la proportion entre la hauteur radiale des flancs et la largeur du sommet dudit bandage. De préférence, ledit écart angulaire final dA_final pourra être compris entre zéro degré et 30 degrés, et plus fréquemment entre 1 degré et 20 degrés, notamment entre 5 degrés et 15 degrés.

Selon l'invention, le dispositif 1 comprend un système de commande 40 qui est agencé pour appliquer une loi de commande L40 qui, tel que cela est visible sur la figure 1, comprend un mode de fonctionnement dit « mode d'assistance conditionnelle », selon lequel i) sur une première plage d'entraxes prédéterminée, dite « premier domaine d'application » DI, la loi de commande L40 associe, à chaque valeur d'entraxe dZ dudit premier domaine d'application DI, une plage d'écarts angulaires autorisés, dite « domaine autorisé » DdA, qui possède une amplitude H_DdA prédéterminée délimitée par une frontière basse DdA_min et une frontière haute DdA_max distincte de la frontière basse DdA_min, et selon lequel ii) lorsque l'on opère un rapprochement axial mutuel des premier et second flasques 11, 12 (pour passer de la configuration initiale à la configuration finale) et que l'entraxe dZ passe ainsi par (et traverse ainsi progressivement de part en part) le premier domaine d'application DI, le mécanisme de rotation 30 reste passif si l'écart angulaire dA se trouve à l'intérieur du domaine autorisé DdA, de manière à laisser le premier flasque 11 et le second flasque 12 à même d'opérer une libre rotation relative l'un par rapport à l'autre sous l'effet de la réaction naturelle du bandage 2 à l'expansion radiale dudit bandage 2 et au rapprochement axial mutuel desdits premier et second flasques 11, 12, et ledit mécanisme de rotation 30 déclenche sélectivement une assistance à la rotation si l'écart angulaire dA atteint l'une des frontières DdA_min, DdA_max du domaine autorisé DdA ou sort dudit domaine autorisé DdA, afin de piloter activement la rotation relative des flasques 11, 12 de manière à forcer l'écart angulaire dA à se maintenir ou à revenir dans ledit domaine autorisé DdA.

Avantageusement, la loi de commande L40 prévoit ainsi que, pour une même valeur d'entraxe dZ, le dispositif 1 puisse adopter sélectivement deux états, à savoir soit un état de rotation libre, soit un état de rotation assistée, en fonction de ce que l'écart angulaire dA effectif se trouve dans le domaine autorisé DdA ou hors dudit domaine autorisé DdA,

Avantageusement, la loi de commande L40 selon l'invention permet donc de laisser les flasques 11, 12 flottants, c'est-à-dire en libre rotation relative : - aussi longtemps que l'écart angulaire dA effectif ne quitte pas le domaine autorisé DdA, si bien qu'il n'est pas nécessaire de corriger activement l'écart angulaire dA en déclenchant une assistance motorisée, - ou bien encore lorsqu'il n'est plus nécessaire de maintenir une assistance précédemment enclenchée, du fait que l'écart angulaire dA effectif est revenu strictement dans le domaine autorisé DdA après s'être trouvé temporairement hors (ou à la frontière) dudit domaine autorisé DdA, de sorte que l'assistance peut être désactivée.

L'amplitude H_DdA du domaine autorisé, à la valeur d'entraxe dZ considérée, définit la tolérance que l'on accorde au système formé par les flasques 11, 12 reliés par le bandage 2 pour s'autoréguler naturellement.

Comme indiqué plus haut, une même loi de commande L40 présente donc une relative polyvalence, puisqu'elle peut adapter individuellement à chaque bandage 2 l'occurrence, la durée et l'intensité de l'assistance qu'elle fournit à la rotation des flasques 11, 12, puisque le déclenchement et/ou le maintien de l'assistance sont conditionnés par les réactions intrinsèques du bandage 2 considéré à l'opération de conformation.

Le déclenchement, respectivement la désactivation, de l'assistance peuvent être réalisés par tout moyen approprié, tel que système mécanique de rampes (voir ci-après), embrayage piloté, activation sélective d'un ou plusieurs moteurs M30 d'assistance à la rotation, etc.

A ce titre, on notera que le mécanisme de rotation 30 pourra comprendre son ou ses propres moteurs M30 d'entraînement, ou bien encore tirer son énergie motrice d'un moteur M13 d'entraînement du mécanisme de translation 13, au moyen d'un système de conversion de mouvement approprié.

Dans tous les cas, on pourra synchroniser le mouvement de rotation des flasques 11, 12, et plus particulièrement l'assistance à la rotation des flasques 11, 12, au mouvement de translation axiale des flasques 11, 12, et plus particulièrement au mouvement de rapprochement axial mutuel des flasques 11, 12.

Le graphique de la figure 1 illustre un exemple de loi de commande L40.

Sur ce graphique, on a représenté par une ligne de tirets un exemple de courbe d'évolution théorique 41, qui correspond à une évolution de l'écart angulaire dA en fonction de l'entraxe dZ qui est jugée optimale, pour un modèle de bandage 2 donné, lors d'une opération de conformation.

On notera que cette courbe d'évolution théorique 41 n'est pas linéaire et présente des transitions douces, en débutant de façon sensiblement tangente à la valeur initiale de l'écart angulaire dA_init, puis en passant par un point d'inflexion, ici situé sensiblement au milieu du premier domaine d'application DI, puis en terminant de façon tangente à la valeur finale de l'écart angulaire dA_final, de sorte que ladite courbe d'évolution théorique 41 présente sensiblement une forme en S.

De préférence, ladite courbe d'évolution théorique 41 est au moins de classe C¹, c'est-à-dire qu'elle est dérivable et que sa dérivée est continue au moins sur l'intervalle que forme le premier domaine d'application DI, et de préférence sur l'intervalle d'entraxe total D_tot qui s'étend de l'entraxe initial dZ_init correspondant à la configuration initiale à l'entraxe final dZ_final correspondant à la configuration finale. Ainsi, une conformation qui suivrait cette évolution thorique se déroulerait de façon progressive, sans à-coups ni contraintes excessives, et donc en respectant l'intégrité du bandage 2.

Ladite courbe d'évolution théorique 41 est contenue dans le domaine autorisé DdA, ici hachuré, voire longe par endroits l'une des frontières, ici la frontière haute DdA_max, dudit domaine autorisé DdA.

Les frontières DdA_max, DdA_min suivent également des courbes, de préférence au moins de classe C¹, la frontière haute DdA_max se trouvant au-dessus de la courbe d'évolution théorique 41, la frontière basse DdA_min se trouvant en-dessous de la courbe d'évolution théorique 41, et lesdites frontières étant distantes l'une de l'autre, pour chaque valeur d'entraxe dZ considérée, d'une hauteur qui représente l'amplitude H_DdA du domaine autorisé à la valeur d'entraxe dZ considérée.

Les frontières DdA_max, DdA_min, la courbe d'évolution théorique 41, et plus globalement la loi de commande 40, sont de préférence des fonctions monotones, selon lesquelles l'écart angulaire dA croît continûment lorsque l'entraxe dZ diminue.

La flèche qui est représentée sur la courbe d'évolution théorique 41 indique le sens de parcours de la courbe d'évolution théorique 41, et donc plus globalement de la loi de commande L40, lors d'une opération de conformation.

La seconde courbe 42, en trait continu, est un exemple de comportement effectif d'un premier bandage 2 lors d'une opération de conformation qui se déroule sans assistance, du fait que, au cours de ladite opération de conformation, le bandage 2 réagit de telle sorte que l'écart angulaire dA effectif reste de façon naturelle en permanence à l'intérieur du domaine autorisé DdA, si bien que la loi de commande L40 ne déclenche jamais l'assistance dans le premier domaine d'application DI.

Au contraire, la troisième courbe 43, en trait mixte, illustre un exemple de conformation au cours de laquelle le bandage 2 ne parvient pas à maintenir naturellement l'écart angulaire dA effectif dans le domaine autorisé DdA, par exemple en raison d'un « point dur » lié à l'apparition d'un frottement excessif dans le mécanisme de rotation 30 d'un flasque 11, 12, de sorte que ledit écart angulaire dA effectif vient « heurter » la frontière, ici la frontière basse DdA_max, au point M1 sur le graphique, ce qui déclenche l'assistance, qui, en l'espèce, permet à la conformation de se poursuivre en longeant ladite frontière basse DdA_max. de sorte à maintenir un écart angulaire dA acceptable pendant que le rapprochement axial se poursuit, et donc que l'entraxe dZ diminue. Dans ce même exemple, on remarquera que, une fois le « point dur » passé, le mécanisme de rotation 30 retrouve sa fluidité, de sorte que la rotation du flasque 11, 12 rattrape son retard et que l'écart angulaire dA réintègre l'intérieur du domaine autorisé DdA, ici au point M2, ce qui provoque la coupure de l'assistance et la poursuite de la conformation avec un mouvement de rotation libre des flasques 11, 12.

Le second domaine hachuré sur le bas du graphique de la figure 1 représente l'évolution de l'amplitude H_DdA du domaine autorisé, et donc les valeurs d'écart angulaire dA autorisées, par rapport à la courbe d'évolution théorique 41, rapportée ici à l'axe des abscisses.

De préférence, l'amplitude H_DdA du domaine autorisé offrira aux flasques 11, 12 un débattement angulaire relatif, et donc un écart angulaire dA possible, qui pourra atteindre au moins 2 degrés, voire au moins 5 degrés, et qui, de préférence, sera également inférieur à 30 degrés, voire inférieur à 15 degrés.

En d'autres termes, il existera au moins une valeur d'entraxe dZ comprise dans le premier domaine d'application DI pour laquelle la loi de commande L40 autorisera un débattement angulaire d'un flasque 11 par rapport à l'autre 12 qui sera au moins égal à 2 degrés, de préférence au moins égal à 5 degrés, tandis que, sur l'ensemble du premier domaine d'application DI, ledit débattement angulaire autorisé ne dépassera pas 30 degrés, de préférence ne dépassera pas 15 degrés.

Le débattement angulaire ainsi autorisé aux flasques 11, 12 sera donc d'une part suffisamment élevé pour permettre au système de commande 40 de privilégier la libre rotation des flasques 11, 12, tant que cette libre rotation n'est pas dommageable au bandage 2, et suffisamment modéré pour s'assurer que le système de commande 40 déclenche l'assistance avant que n'apparaissent des conditions de torsion potentiellement dommageables au bandage 2.

Par ailleurs, on notera que, de préférence, l'amplitude H_DdA du domaine autorisé varie en fonction de l'entraxe dZ.

Ainsi, la loi de commande L40 pourra définir une amplitude H_DdA non constante en fonction de l'entraxe dZ, et donc adapter, avantageusement de façon progressive, la tolérance du système de commande 40 au degré de conformation du bandage 2 et/ou au comportement non linéaire du bandage 2.

A titre indicatif, le système de commande 40 pourra être relativement sévère, et donc l'amplitude H_DdA être relativement faible, en début de conformation, pour favoriser la réactivité du système de commande 40 afin que, bien que les flasques 11, 12 soient de préférence initialement en libre rotation, l'assistance puisse se déclencher quasi-instantanément si l'écart angulaire dA croît trop rapidement sous l'effet d'un couple de torsion élevé qui naîtrait de l'inertie d'un flasque au démarrage de la rotation (et plus globalement qui naîtrait d'un couple résistant s'opposant à la libre rotation dudit flasque), couple de torsion qui risquerait d'endommager voire de déchirer le bandage 2. L'amplitude H_DdA pourra ensuite augmenter, et donc le système de commande 40 devenir plus tolérant, et donc moins prompt à délivrer une assistance motorisée, une fois le mouvement de rotation des flasques 11, 12 amorcé, et tandis que le rapprochement axial se poursuit. Le système de commande pourra ainsi notamment tolérer des variations d'écart angulaire dA qui seraient liées au comportement visco-élastique du bandage 2 en torsion, et/ou à des fluctuations des frottements affectant la libre rotation des flasques 11, 12. En fin de conformation, l'amplitude H_DdA pourra de nouveau être réduite, et donc le système de commande 40 redevenir plus sévère, afin de gagner en précision, en déclenchant l'assistance si l'écart angulaire dA dévie un tant soit peu de la valeur-cible dA_final souhaitée, pour parvenir à une radialisation correcte des fils de renfort des flancs du bandage.

De préférence, le domaine autorisé DdA défini par la loi de commande L40 présente une amplitude H_DdA qui croît tout d'abord tandis que l'entraxe dZ diminue, sur une première portion DI_1 du premier domaine d'application DI, première portion DI_1 qui est située vers, et de préférence qui inclut, l'entraxe initial dZ_init qui correspond à la configuration initiale du bandage 2, sensiblement cylindrique, puis qui décroît sur une seconde portion DI_2 du premier domaine d'application DI, seconde portion DI_2 qui est située vers, voire qui inclut, l'entraxe final dZ_final qui correspond à la configuration finale du bandage 2, torique, de manière à faire converger l'écart angulaire dA vers un écart angulaire final dA_final cible qui correspond à l'écart angulaire que l'on souhaite obtenir en configuration finale.

Ainsi, le domaine représentant l'amplitude H_DdA du domaine autorisé présente un renflement dans la portion centrale du premier domaine d'application DI, et confère au système de commande 40 son caractère adaptatif tel que décrit ci-dessus. Avantageusement, la convergence des frontières DdA_min, DdA_max vers une même valeur cible d'écart angulaire final dA_final, et donc la réduction correspondante de l'amplitude H_DdA dans la seconde portion DI_2 du premier domaine d'application, fait que plus l'entraxe dZ et le bandage 2 s'approchent de la configuration finale, moins le système de commande 40 tolère de débattement angulaire libre d'un flasque 11 par rapport à l'autre flasque 12, et donc plus ledit système de commande 40 tend à déclencher facilement l'assistance à la rotation pour maîtriser précisément l'orientation des fils de renforts des flancs.

De préférence, le premier domaine d'application DI couvre au moins 50%, de préférence au moins 75%, voire au moins 90% de l'intervalle d'entraxe total D_tot que décrit l'entraxe dZ lors de la course axiale totale des flasques 11, 12 qui est nécessaire pour faire passer le bandage 2 d'une configuration initiale, sensiblement cylindrique, à une configuration finale, correspondant à la forme torique souhaitée.

Ainsi, avantageusement, le système de commande 40 pourra favoriser une rotation libre, et appliquer le principe de l'assistance conditionnelle, sur la majorité voire la quasi-totalité de la course axiale des flasques 11, 12, et donc sur l'essentiel de l'opération de conformation, et n'appliquer véritablement un asservissement contraignant sur les flasques 11, 12 qu'en toute fin de course axiale, et le cas échéant, si nécessaire, en tout début de course axiale.

Par ailleurs, selon une caractéristique préférentielle qui peut constituer une invention à part entière, la loi de commande L40 comprend au moins une fonction de blocage en rotation, et de préférence comprend les deux fonctions de blocage en rotation, parmi : i) une première fonction de blocage en rotation F_lock_1 qui permet de bloquer la rotation relative des flasques 11, 12 dans la configuration initiale, correspondant à une valeur initiale d'entraxe dZ_init ou une plage de valeurs d'entraxe D_lock_init qui précède le premier domaine d'application DI, et dans laquelle le bandage 2 présente une forme cylindrique, avant l'opération de conformation, et ii) une seconde fonction de blocage en rotation F_lock_2 qui permet de bloquer la rotation relative des flasques 11, 12 dans la configuration finale, correspondant à une valeur finale d'entraxe dZ_final ou à une plage de valeurs d'entraxe D_lock_final qui suit le premier domaine d'application DI, et dans laquelle le bandage 2 présente une forme torique souhaitée, à l'issue de l'opération de conformation.

La première fonction de blocage en rotation F_lock_1 permettra avantageusement, lorsqu'elle est activée, de bloquer la rotation des flasques 11, 12 relativement l'un à l'autre et relativement au fût 14 pendant l'étape de confection à plat du bandage, de sorte à garantir que le tambour 10 se comporte comme un ensemble unitaire stable pendant que l'on pose sur ledit tambour 10 les composants du bloc carcasse, parmi lesquels au moins la nappe carcasse et les tringles. La première fonction de blocage en rotation F_lock_1 sera ensuite désactivée au moment de débuter l'opération de conformation, afin de libérer la rotation relative des flasques 11, 12.

La seconde fonction de blocage en rotation F_lock_2 permettra avantageusement de bloquer la rotation relative des flasques 11, 12 à la fin de l'opération de conformation, de sorte à assurer un maintien stable des talons 3, 4 du bandage 2 pendant que l'on rapportera et que l'on fixera sur ledit bandage 2 conformé, ici sur le bloc carcasse, le bloc sommet comprenant la bande de roulement, ou bien encore pendant que l'on effectuera les opérations de rouletage au moyen des bras 20.

Lesdites fonctions de blocage F_lock_1, F_lock_2, ainsi activables de part et d'autre du premier domaine d'application DI, respectivement avant le début de la course axiale nécessaire à la conformation et à la fin de ladite course axiale nécessaire à la conformation, pourront être mises en œuvre par tout moyen approprié au blocage de la rotation d'un flasque 11, 12 par rapport au fût 14, incluant par exemple un frein mécanique à friction, un verrou mécanique, un système d'embrayage piloté, l'asservissement en freinmoteur d'un moteur de rotation, ou un agencement spécifique de rampes de guidages, etc.

On notera que, graphiquement, au vu des caractéristiques ci-dessus, les frontières DdA_max, DdA_min pourront de préférence, tout comme la courbe d'évolution théorique 41, suivre des courbes en S, qui présentent à leur point de départ dZ_init une tangente à la valeur d'entraxe initiale dA_init, tangente qui est horizontale et de préférence commune aux deux frontières, puis une évolution progressive avec un point d'inflexion, puis une convergence vers une tangente à la valeur d'entraxe finale dA_final, ici encore une tangente horizontale et de préférence commune aux deux frontières, comme cela est visible sur la figure 1.

Selon une première possibilité de mise en œuvre, la loi de commande L40 se présente sous forme électronique, de préférence sous forme d'un ensemble de données numériques tel qu'une formule mathématique, une cartographie, un abaque ou un tableau, et est mise à disposition d'un calculateur 50 du système de commande 40 qui pilote un ou plusieurs moteurs M13, M30 actionnant le mécanisme de translation 13 et le mécanisme de rotation 30, tel que cela est illustré sur la figure 2.

Avantageusement, une telle solution permet notamment de programmer ou reprogrammer facilement la loi de commande L40 pour adapter le dispositif 1 à chaque nouveau modèle de bandage 2 que l'on souhaite conformer, sans avoir à modifier les éléments mécaniques du tambour 10.

Elle permet également de faire évoluer la loi de commande L40 en fonction de différents paramètres qui interviennent dans l'opération de conformation, notamment en fonction de la pression de gonflage qui est choisie pour provoquer l'expansion radiale du bandage 2.

Selon cette première possibilité de mise en œuvre, pour réaliser une conformation du bandage 2, le calculateur 50 pilotera le moteur M13 d'entraînement en translation pour forcer le rapprochement axial des flasques 11, 12 l'un de l'autre, évaluera l'entraxe dZ correspondant, par exemple en mesurant ou en évaluant la position axiale de chacun des flasques 11, 12 au moyen de capteurs intégrés au mécanisme de translation 13 et, dans le même temps, évaluera à chaque instant l'écart angulaire dA, par exemple en mesurant les positions angulaires A11, A12 respectives des flasques 11, 12 au moyen de capteurs appropriés. Le calculateur 50 pourra ainsi, à chaque instant considéré, comparer le point de fonctionnement (dZ, dA) effectif, c'est-à-dire le point ayant pour coordonnées (sur le graphique de la figure 1) l'entraxe dZ effectif en abscisses et l'écart angulaire dA effectif en ordonnées, au domaine autorisé DdA défini par la loi de commande L40, et ainsi décider : - soit de poursuivre le rapprochement axial en laissant les flasques 11, 12 en libre rotation relative, si le point de fonctionnement (dZ, dA) effectif se trouve à l'intérieur du domaine autorisé DdA, - soit déclencher l'assistance pour asservir la rotation relative des flasques 11, 12 si le point de fonctionnement (dZ, dA) effectif atteint ou franchit une frontière DdA_min, DdA_max du domaine autorisé, afin de compenser l'inadéquation de la rotation naturelle des flasques, et ainsi de maintenir ou ramener le point de fonctionnement dans le domaine autorisé DdA.

L'activation de l'assistance par le calculateur 50 d'après une loi de commande L40 électronique, virtuelle, pourra dépendre de la nature du mécanisme de rotation 30.

De préférence, le mécanisme de rotation 30 pourra être pourvu d'un ou plusieurs moteurs M30 d'entraînement propres, distincts du moteur M13 d'entraînement en translation. Dans ce cas, le calculateur 50 pourra, lorsqu'il décide de déclencher une assistance, activer sélectivement ledit ou lesdits moteurs M30 d'entraînement en rotation pour fournir un couple d'assistance à la rotation des flasques 11, 12 et/ou asservir la position angulaire A11, A12 desdits flasques. Le système de commande 40 qui applique la loi de commande L40 électronique pourra ainsi agir à la manière d'une « came électrique », qui ajuste l'intensité de l'assistance et l'ampleur du déplacement en rotation des flasques 11, 12 en fonction de la valeur d'entraxe dZ et le cas échéant en fonction de la vitesse d'évolution dudit entraxe dZ, et donc en fonction du pilotage du moteur M13 d'entraînement en rotation, selon un rapport de synchronisation (entre ledit moteur M13 d'entraînement en translation et le ou les moteurs M30 d'entraînement en rotation) qui pourra être défini et ajusté pour toute valeur d'entraxe dZ par la loi de commande L40.

De préférence, un tel mécanisme de rotation 30 pourra comporter un embrayage, piloté par le calculateur 50, et qui pourra adopter sélectivement soit une configuration d'engagement, dans laquelle ledit embrayage assure une liaison entre le moteur M30 d'entraînement en rotation et le flasque concerné, afin de délivrer une assistance à la rotation relative des flasques 11, 12, soit une configuration de dégagement, dans laquelle ledit embrayage dissocie le flasque 11, 12 du moteur d'entraînement M30, et plus particulièrement déconnecte ledit flasque 11, 12 de la chaîne cinématique comprenant ledit moteur d'entraînement M30 et son réducteur associé, afin de libérer la rotation relative des flasques 11, 12, et plus particulièrement afin d'empêcher le moteur M30 et son réducteur d'exercer un couple résistant qui serait susceptible d'entraver la libre rotation du flasque 11, 12 considéré.

Dans tous les cas, le calculateur 50, et donc plus globalement le système de commande 40 appliquant la loi de commande L40 électronique, pourra avantageusement utiliser une bascule à seuils pour éviter des oscillations qui seraient dues à une alternance trop rapprochée entre un déclenchement de l'assistance et l'arrêt suivant de l'assistance, du fait que le point de fonctionnement (dZ, dA) se trouve au voisinage immédiat d'une frontière DdA_min, DdA_max du domaine autorisé DdA, et donc à la limite de la nécessité d'une assistance.

Ainsi, par exemple, si l'assistance est déclenchée lorsque le point de fonctionnement, situé dans le domaine autorisé DdA, atteint une frontière DdA_min, DdA_max dudit domaine autorisé (point M1 sur la figure 1), alors l'assistance pourra être maintenue jusqu'à ce que le point de fonctionnement revienne strictement à l'intérieur du domaine autorisé DdA, à une distance (angulaire) seuil prédéfinie de la frontière DdA_min, DdA_max par rapport à laquelle l'assistance s'est déclenchée, et/ou à une distance (angulaire) seuil prédéfinie de la frontière DdA_min, DdA_max qui est la plus proche dudit point de fonctionnement (dZ, dA) à l'instant considéré.

Selon une possibilité, l'assistance pourra être maintenue jusqu'à ce que le point de fonctionnement (dZ, dA) effectif atteigne la courbe d'évolution théorique 41, c'est-à-dire que le calculateur 50 utilisera ladite courbe d'évolution théorique 41 comme consigne lorsqu'il activera l'assistance, et pilotera la rotation des flasques 11, 12 selon cette consigne. Sur le graphique de la figure 1, et en référence à l'opération de conformation illustrée par la troisième courbe 43, cela reviendra à maintenir l'assistance active depuis le point M1, où l'assistance se déclenche à la frontière basse DdA_min du domaine autorisé, jusqu'au point M2' d'intersection de ladite troisième courbe 43 avec la courbe d'évolution théorique 41, point M2' à partir duquel l'assistance est de nouveau désactivée.

Une fois que l'assistance aura permis aux flasques 11, 12 de corriger leur position angulaire pour revenir à un écart angulaire dA acceptable, par exemple à l'écart angulaire dA prévu par la courbe d'évolution théorique 41 au regard de l'entraxe dZ effectif en cours, alors le calculateur 50, et plus globalement le système de commande 40, pourra désactiver l'assistance pour rendre aux flasques 11, 12 leur liberté de rotation relative.

Selon une seconde possibilité de mise en œuvre, qui peut constituer une invention à part entière, la loi de commande L40, au lieu d'être électronique et donc virtuelle, sera matérialisée par un guide 60 mécanique qui comprend une rainure de guidage 61 dans laquelle est engagé un doigt 62, 63, 64, 65 fixé à l'un des flasques 11, 12, tel que cela est notamment illustré sur les figures 3, 4, 5, 6, 7, 8, 10, 12, 13, 14, 15, 16, 17, 18.

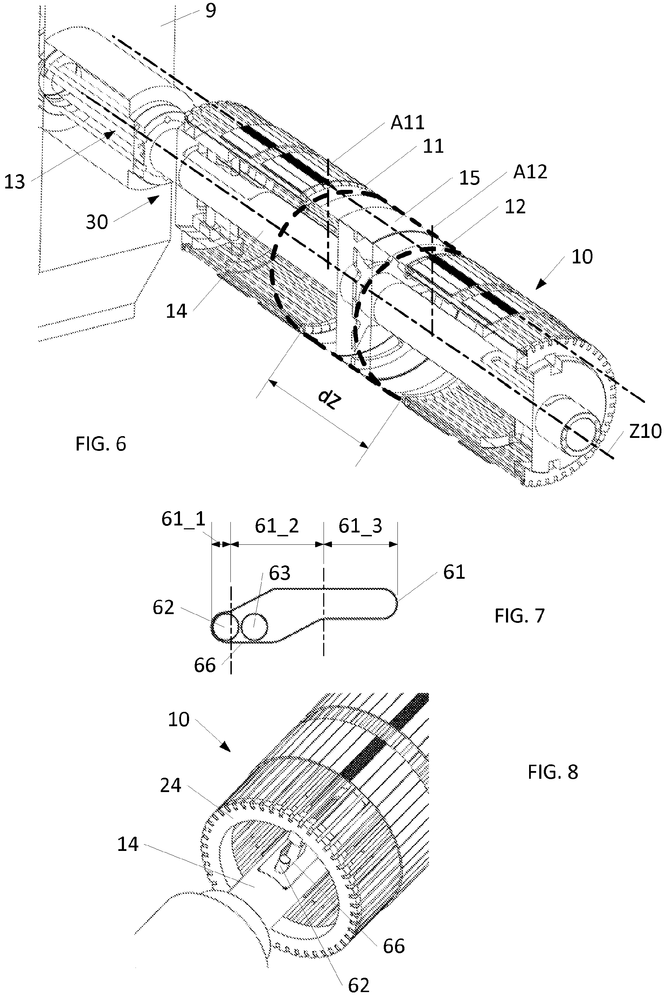

Tel que cela est bien visible sur la figure 3, puis sur les figures 7, 10, 12, 15 et 17, la rainure de guidage 61 possède des bords latéraux qui forment, à l'encontre du doigt 62, 63, 64, 65 considéré, des profils de guidage 66, 67, 68, 69 qui autorisent un déplacement axial dudit doigt 62, 63, 64, 65 lors des modifications de l'entraxe dZ tout en matérialisant en azimut autour de l'axe central Z10 les frontières du domaine autorisé DdA, de sorte d'une part à offrir audit doigt 62, 63, 64, 65, et donc au flasque 11, 12 correspondant, dans chacune des positions axiales dudit doigt 62, 63, 64, 65, et donc dudit flasque 11, 12, un débattement angulaire RA qui correspond à l'amplitude H_DdA du domaine autorisé pour la position axiale considérée, et d'autre part à contenir ledit doigt 62, 63, 64, 65 dans le domaine autorisé DdA en formant des butées circonférentielles à l'encontre de la rotation azimutale du doigt 62, 63, 64, 65, et donc du flasque 11, 12 correspondant, lorsque ledit doigt 62, 63, 64, 65 atteint une position azimutale qui correspond à l'une des frontières DdA_min, DdA_max dudit domaine autorisé DdA.

Plus particulièrement, la rainure de guidage 61 pourra comprendre :
- un premier profil de guidage 66, qui correspond à la position angulaire du flasque 11, 12 dans la configuration initiale, avec les fils de renfort non radialisés, premier profil de guidage 66 qui se présente de préférence sous forme d'un premier palier rectiligne et parallèle à l'axe central Z10 ;
- un second profil de guidage 67, qui correspond à la position angulaire du flasque 11, 12 dans la configuration finale, avec les fils de renfort radialisés, second profil de guidage 67 qui se présente de préférence sous forme d'un second palier rectiligne et parallèle à l'axe central Z10, décalé en azimut par rapport au premier profil de guidage 66 ;
- un troisième profil de guidage 68 qui forme une rampe de radialisation, assurant la transition entre le premier palier non radialisé et le second palier radialisé, et apte à forcer le déplacement circonférentiel du doigt 62, 63, 64, 65 et donc la rotation du flasque 11, 12, en convertissant en couple de rotation l'effort de poussée axiale qui est exercé par le moteur M13 d'entraînement axial sur le doigt 62, 63, 64, 65 lors du rapprochement axial des flasques 11, 12 nécessaire à la conformation du bandage 2 ;
- et un quatrième profil de guidage 69 qui, dans le sens de la conformation, c'est-à-dire dans le sens d'une réduction de l'entraxe dZ, limite l'amplitude possible de la rotation azimutale du doigt 62, 63, 64, 65 pour empêcher le flasque 11, 12 d'opérer une rotation libre excessive qui ferait sortir l'écart angulaire dA du domaine autorisé DdA, ici par la frontière supérieure DdA_max. Avantageusement, dans le sens inverse, c'est-à-dire le sens du retour, lorsque l'on éloigne les flasques 11, 12 axialement l'un de l'autre pour ramener le tambour 10 dans sa configuration initiale, afin de permettre la confection d'un nouveau bandage 2, le quatrième profil de guidage 69 forme une rampe de réinitialisation qui assure la transition entre le second palier et le premier palier, et qui est à cet effet apte à forcer, par conversion de l'effort de poussée axiale exercé par le moteur M13 d'entraînement axial qui éloigne les flasques l'un de l'autre, la rotation du doigt 62, 63, 64, 65, et donc du flasque 11, 12 dans un sens inverse du sens de rotation ayant permis la radialisation, et ce pour ramener le doigt, et le flasque, dans sa position angulaire initiale.

En pratique, les premier et troisième profils de guidage 66, 68 correspondent à la frontière basse DdA_min du domaine autorisé DdA, tandis que les second et quatrième profils de guidage 67, 69 correspondent à la frontière haute DdA_max.

Tel que cela est notamment visible sur la figure 3, le troisième profil de guidage 68, formant une rampe, suivra de préférence un tracé hélicoïdal par rapport à l'axe central Z10, tracé hélicoïdal dont l'angle d'hélice B68 pourra être compris entre 1 degré et 45 degrés, de préférence entre 2 degrés et 30 degrés, par exemple entre 5 degrés et 20 degrés.

De même, le quatrième profil de guidage 69, formant une rampe, suivra de préférence un tracé hélicoïdal par rapport à l'axe central Z10, tracé hélicoïdal dont l'angle d'hélice B69 pourra être compris entre 1 degré et 45 degrés, de préférence entre 2 degrés et 30 degrés, par exemple entre 5 degrés et 20 degrés.

L'angle d'hélice B69 du quatrième profil hélicoïdal 69 pourra être égal, ou éventuellement strictement supérieur, à l'angle d'hélice B68 du troisième profil hélicoïdal 68.

Par ailleurs, le quatrième profil de guidage 69 est de préférence décalé axialement par rapport au troisième profil de guidage 68 afin de produire l'effet de variation progressive de l'amplitude H_DdA du domaine autorisé, et donc de renflement dudit domaine autorisé DdA, tel que cela a été décrit plus haut.

Le troisième profil de guidage 68 et/ou le quatrième profil de guidage 69 pourront être conformés pour instaurer une relation proportionnelle, de type linéaire, entre la position axiale et la position angulaire, ou bien une relation non linéaire, reflétant une frontière DdA_min, DdA_max incurvée du domaine autorisé DdA, par exemple une frontière incurvée en forme de S telle que décrite plus haut.

De préférence, le dispositif 1, et plus particulièrement le tambour 10, possèdera deux guides 60 mécaniques, un pour chaque flasque 11, 12. De préférence, lesdits guides pourront présenter un agencement sensiblement symétrique, de sorte que la rainure du premier guide 60 est agencée pour dévier en rotation le premier flasque 11 dans un sens tandis que la rainure du second guide 60 est agencée pour dévier en rotation le second flasque 12 dans le sens opposé.

Bien entendu, la course en rotation, et donc l'écart angulaire dA qui en résulte, étant ainsi répartie sur deux guides 60, on adaptera en conséquence les dimensions de chaque guide 60, et donc l'amplitude individuelle du débattement angulaire RA qu'autorise chaque guide au flasque concerné 11, 12, de sorte que le cumul des débattements angulaires RA sur l'ensemble des deux guides 60 correspondent au domaine autorisé DdA total tel que défini par la loi de commande L40.

Ceci étant, on pourrait bien entendu prévoir un seul guide 60 afin d'appliquer la loi de commande L40 à un seul des premier et second flasques 11, 12 sans sortir du cadre de l'invention.

De préférence, le guide 60 se présentera sous la forme d'une plaque amovible, portée par le fût 14, de sorte que l'on puisse aisément changer de guide 60 en fonction du modèle de bandage 2 à conformer. Le dispositif 1 pourra ainsi comprendre un jeu de plaques interchangeables formant autant de guides 60 mécaniques adaptés à autant de bandages 2 différents.

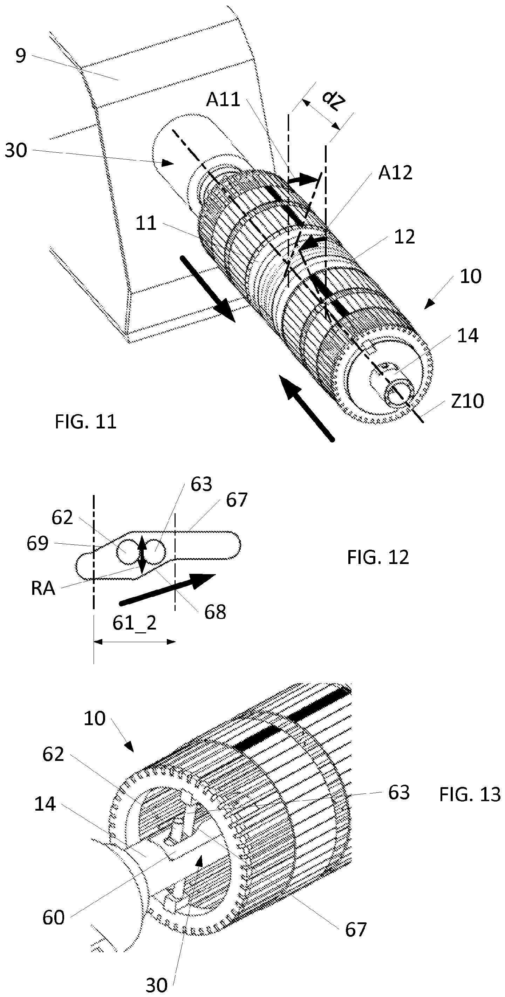

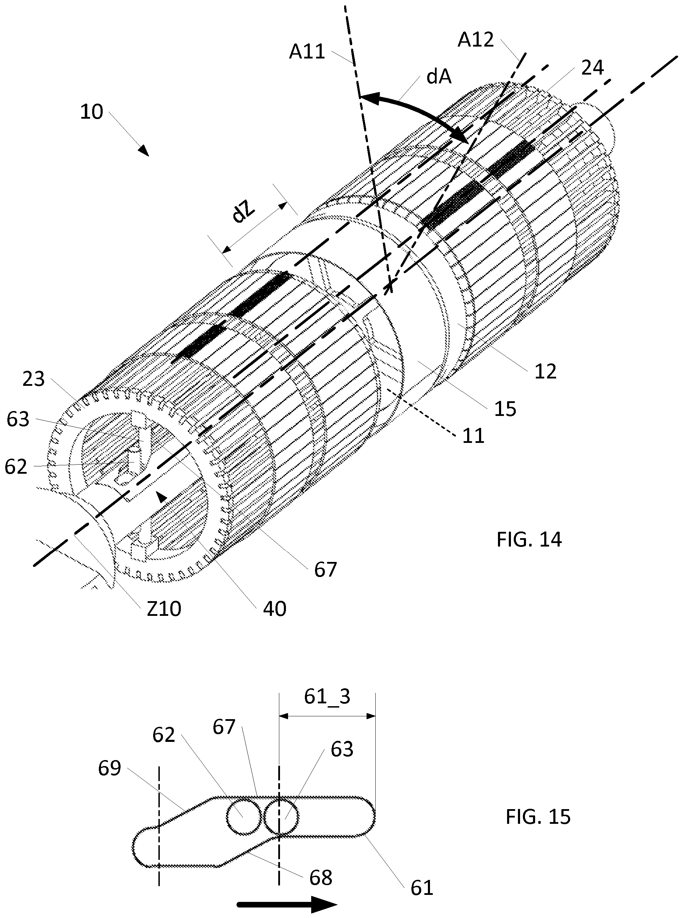

De préférence, et tel que cela est visible sur les figures 3, 7, 10, 12, 15 et 17, la rainure de guidage 61 présente axialement une succession de plusieurs tronçons 61_1, 61_2, 61_3 comprenant, dans le sens correspondant au sens de rapprochement axial des flasques 11, 12 :
- un premier tronçon 61_1 formant un tronçon de blocage, au sein duquel le doigt 62, 63, 64, 65, et donc le flasque 11, 12 correspondant, sont bloqués en rotation, dans une première position angulaire dite « position angulaire initiale », qui correspond à la configuration initiale dans laquelle le bandage 2 présente une forme sensiblement cylindrique, comme illustré sur la figure 7,
- puis un second tronçon 61_2 formant un tronçon de libération, au sein duquel le doigt 62, 63, 64, 65 et donc le flasque 11, 12 sont libres en rotation sur un débattement angulaire RA correspondant à celui prévu par l'amplitude H_DdA du domaine autorisé, comme illustré sur la figure 12,
- puis un troisième tronçon 61_3 formant un autre tronçon de blocage au sein duquel le doigt 62, 63, 64, 65 et donc le flasque 11, 12 sont bloqués en rotation dans une seconde position angulaire différente de la première position angulaire, et dite « position angulaire finale », qui correspond à une configuration finale dans laquelle le bandage 2 présente la forme torique souhaitée, comme illustré sur les figures 15 et 17.

Avantageusement, le premier tronçon 61_1 pourra ainsi remplir la première fonction de blocage F_lock_1 décrite plus haut, afin de maintenir le dispositif 1, et plus particulièrement le tambour 10 et les flasques 11, 12 dans la configuration initiale, qui est caractérisée par un entraxe égal à l'entraxe initial dZ_init et un écart angulaire égal à l'écart angulaire initial dA_init, et qui permet la confection à plat du bandage 2 (figures 6 et 7).

De même, le troisième tronçon 61_3 remplira la seconde fonction de blocage F_lock_2 permettant de maintenir avec précision les flasques 11, 12 dans la configuration finale avec les fils de renfort radialisés (figures 14, 15, 16, 17, 18).

A titre indicatif, le second tronçon 61_2 offrira au flasque 11, 12 concerné un débattement angulaire RA pouvant de préférence atteindre au moins 2 degrés, au moins 3 degrés voire au moins 5 degrés, et étant de préférence inférieur à 30 degrés, ou inférieur à 15 degrés, voire inférieur à 10 degrés.

En pratique, si l'on utilise deux guides 60 associés chacun à un flasque 11, 12, le débattement angulaire RA offert par chaque guide 60, à chaque valeur d'entraxe dZ considérée, pourra représenter sensiblement voire exactement la moitié de l'amplitude H_DdA du domaine autorisé tel que défini pour la valeur d'entraxe dZ considérée.

Selon une variante possible de réalisation, on pourra associer deux doigts 62, 63, 64, 65 à chaque flasque 11, 12, lesdits deux doigts étant de préférence captifs de la même rainure de guidage 61, tel que cela est notamment visible sur les figures 4, 5, 7, 10, 12, 15 et 17.

Les deux doigts 62, 63 d'un même flasque 11 seront de préférence tous deux solidaires du flasque 11 en rotation, de sorte qu'ils contribueront tous deux à l'application de la loi de commande L40, mais pourront, sous certaines conditions, être écartés axialement l'un de l'autre pour forcer et contrôler le déploiement des bras 20 en basculement, tel que cela est illustré sur les figures 16, 17 et 18.

A cet effet, le troisième tronçon 61_3 de la rainure de guidage 61 pourra avantageusement former une glissière rectiligne, parallèle à l'axe central Z10, qui prolonge ladite rainure de guidage 61 de manière à autoriser la poursuite de la translation du second doigt 63 par rapport au premier doigt 62 tout en bloquant la rotation des flasques conformément à l'écart angulaire final dA_final.

Le second doigt 63 étant de préférence en prise sur la couronne 24, tandis que le premier doigt 62 est en prise sur le premier flasque 11, et donc sur le corps par rapport auquel la couronne 24 peut coulisser, le mouvement en translation axiale du second doigt 63 par rapport au premier doigt 62, au sein de la rainure de guidage 61, provoque un déplacement équivalent en translation axiale de la couronne 24 sur le premier flasque 11, et donc le basculement des bras 20 vers l'extérieur, comme illustré sur les figures 16, 17 et 18.

On notera par ailleurs que selon que l'on opte pour une loi de commande L40 électronique ou mécanique, on pourra en tirer différents avantages.

Ainsi, l'utilisation d'un guide 60 mécanique permet de simplifier dispositif 1 et le tambour 10, en dispensant notamment de moteurs M30 qui seraient spécifiquement dédiés à la gestion de la rotation des flasques 11, 12. L'utilisation d'un guide 60 mécanique offre également une solution particulièrement robuste et précise, notamment pour assurer le blocage en rotation des flasques 11, 12 avant la conformation, pendant la confection à plat du bloc carcasse, puis après la conformation, notamment pendant la pose du bloc sommet et/ou pendant le rouletage des flancs du bandage.

En revanche, il est nécessaire de changer le guide mécanique 60 lorsque l'on modifie les dimensions, et plus globalement le modèle, du bandage 2 à fabriquer.

En outre, lorsque l'on utilise un guide 60 mécanique à rainure de guidage 61 tel que décrit ci-dessus, le retour des flasques 11 à leur position axiale initiale s'accompagne également d'un retour desdits flasques à leur position angulaire initiale. Les mouvements en rotation des flasques 11, 12 s'effectuent donc toujours dans le même secteur angulaire relativement peu étendu, de façon répétée au fil des cycles de fabrication, ce qui peut favoriser l'apparition d'une usure localisée au niveau des flasques 11, 12, du fût 14, ou des paliers qui soutiennent ces éléments.

A l'inverse, l'utilisation d'une loi de commande L40 électronique permet une adaptation facile aux différents modèles de bandages 2 par reprogrammation ou reparamétrage de la loi de commande L40, ou téléchargement de la loi de commande L40 à partir d'une bibliothèque contenant plusieurs lois de commande L40 prédéfinies.

L'utilisation d'une loi de commande L40 électronique permettra également d'utiliser comme origine angulaire, pour le départ d'un nouveau cycle, la position angulaire des flasques atteinte par lesdits flasques 11, 12 dans la configuration angulaire finale du cycle précédent, sans qu'il soit nécessaire de revenir à la position angulaire d'origine utilisée dans ledit cycle précédent. Chaque nouveau cycle de fabrication pourra ainsi être exécuté dans un secteur angulaire des flasques 11, 12 et du fût 14 qui est décalé par rapport au secteur angulaire parcouru lors du cycle précédent. Ainsi, on pourra répartir, par incrément angulaire de l'origine du référentiel angulaire au fur et à mesure des cycles successifs, les contraintes et l'usure de manière sensiblement homogène sur tout le tour des flasques 11, 12, du fût 14, et de leurs paliers respectifs, en contribuant ainsi à augmenter la durée de vie de ces organes mécaniques.

Bien entendu, l'invention concerne également un procédé de conformation d'un bandage 2, et plus particulièrement de conformation d'un bandage 2 à sommet polarisé.

Ledit procédé comprend une étape de rapprochement au cours de laquelle on rapproche axialement l'un de l'autre un premier flasque 11 portant un premier talon 3 du bandage 2 et un second flasque 12 portant un second talon 4 dudit bandage afin de modifier la distance séparant axialement lesdits flasques 11, 12, dite « entraxe » dZ, pour faire passer ledit bandage 2 d'une configuration initiale sensiblement cylindrique à une configuration finale torique.

Le rapprochement axial, qui se traduit par une diminution progressive et continue de l'entraxe dZ, est généré par le moteur M13 qui entraîne le mécanisme de translation 13 agissant sur les flasques 11, 12.

Selon l'invention, au cours de l'étape de rapprochement axial, on mesure la position angulaire azimutale relative du premier flasque 11 par rapport au second flasque 12, dite « écart angulaire » dA, et on contrôle la rotation du premier flasque 11 et/ou du second flasque 12 autour de l'axe central Z10 commun auxdits flasques 11, 12 en mettant en œuvre une loi de commande L40.

Selon une possibilité de mise en œuvre du procédé, la loi de commande L40 est programmée sous une forme électronique, de préférence sous la forme de données numériques, pour permettre un pilotage électronique d'un ou plusieurs moteurs M13, M30 actionnant le premier et/ou le second flasque 11, 12 en rotation.

Dans l'absolu, on pourrait tirer l'énergie mécanique nécessaire à l'assistance en rotation de manière indirecte en dérivant ladite énergie d'un moteur M13 d'entraînement servant à actionner (également) le mécanisme de translation 13 assurant le rapprochement axial des flasques 11, 12. Cependant, de préférence, on tirera l'énergie mécanique nécessaire à l'assistance en rotation de manière directe, en activant à cet effet un ou plusieurs moteurs M30 spécifiquement dédiés à la rotation des flasques 11, 12.

Selon une autre possibilité de mise en œuvre du procédé, la loi de commande L40 est mise en œuvre au moyen d'un guide 60 mécanique pourvu d'une rainure de guidage 61 qui coopère avec un doigt 62, 63, 64, 65 fixé à l'un des flasques 11, 12.

Dans tous les cas, quelle que soit la forme, électronique ou mécanique, prise par la loi de commande L40, ladite loi de commande L40 comprend un mode d'assistance conditionnelle selon lequel, sur une première plage d'entraxes prédéterminée, dite « premier domaine d'application » DI, la loi de commande L40 associe à chaque valeur d'entraxe dZ dudit premier domaine d'application DI une plage d'écarts angulaires autorisés, dite « domaine autorisé » DdA, qui possède une amplitude H_DdA prédéterminée délimitée par une frontière basse DdA_min et une frontière haute DdA_max, puis selon lequel, si l'écart angulaire dA mesuré se trouve à l'intérieur du domaine autorisé DdA, on laisse le premier flasque 11 et le second flasque 12 opérer une libre rotation relative l'un par rapport à l'autre sous l'effet de la réaction naturelle du bandage à l'expansion radiale dudit bandage et au rapprochement axial mutuel desdits flasques 11, 12, et, si l'écart angulaire dA mesuré atteint l'une des frontières DdA_min, DdA_max du domaine autorisé ou sort dudit domaine autorisé DdA, on déclenche sélectivement une assistance à la rotation afin de piloter activement la rotation relative des flasques 11, 12 de manière à forcer l'écart angulaire dA mesuré à se maintenir ou à revenir dans ledit domaine autorisé DdA.

Ainsi, on activera l'assistance si et seulement si l'écart angulaire dA effectivement constaté dévie suffisamment des valeurs souhaitées, et notamment de la courbe d'évolution théorique 41 optimale, pour sortir du domaine autorisé DdA pré-établi.

De préférence, au départ, le dispositif 1 et le bandage 2 se trouvent dans une configuration initiale, qui a permis au tambour 10 de recevoir les composants du bloc carcasse du bandage 2, selon une configuration cylindrique droite dite « configuration à plat ». Cette configuration initiale correspond à un point de fonctionnement initial (dZ_init, dA_init). Dans cette configuration initiale, le premier flasque 11 et le second flasque 12 sont distants axialement d'un entraxe initial dZ_init, et bloqués en rotation l'un par rapport à l'autre de sorte à présenter un écart angulaire initial dA_init, de préférence nul par convention (figures 4, 5, 6, 7, 8).

Dans le cas d'une loi de commande électronique L40, la première fonction de blocage F_lock_1 est en état actif.

Dans le cas d'une loi de commande L40 mécanique, au moins un doigt, ici le premier doigt 62, respectivement 64, de chaque flasque 11, 12 est engagé dans le tronçon de blocage 61_1 de la rainure de guidage 61 du guide 60 associé au flasque considéré (figures 6, 7, 8).

La première phase de la loi de commande L40 permet de préférence de déverrouiller la rotation des flasques 11, 12, afin d'autoriser une libre rotation relative d'un flasque par rapport à l'autre.

Si l'on utilise une loi de commande L40 électronique, cette phase de déverrouillage peut être réalisé en désactivant la première fonction de blocage F_lock_1, ce qui envoie un signal de libération qui, par exemple, déverrouille un loquet ou desserre un frein qui bloquait la rotation de l'un et/ou l'autre des flasques 11, 12, ici de préférence la rotation dudit flasque 11, 12 par rapport au tambour 14.

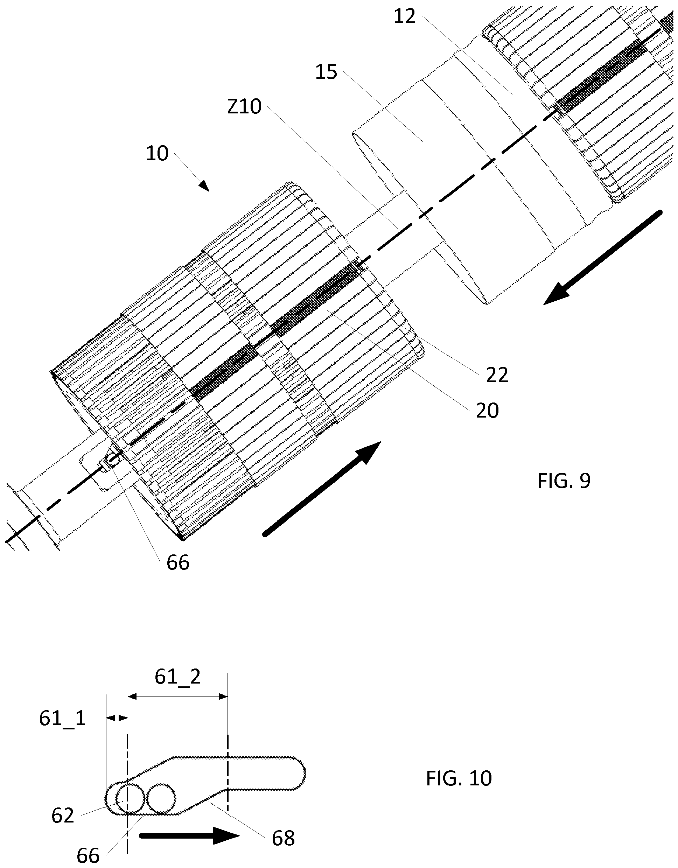

Si l'on utilise une loi de commande L40 mécanique, cette phase de déverrouillage peut être accomplie en déclenchant la translation axiale du flasque 11, 12 concerné jusqu'à ce que le premier doigt 62, respectivement 64, s'extraie du tronçon de blocage 61_1 de la rainure de guidage 61 (figures 9, 10).

On poursuit le rapprochement axial des flasques, et donc la réduction de l'entraxe dZ, de sorte que l'on se retrouve dans le premier domaine d'application DI de la loi de commande L40, qui permet de laisser une certaine liberté de débattement angulaire aux flasques 11, 12.

Dans le cas d'une loi de commande L40 électronique, on surveille, au moyen de tout capteur approprié, les valeurs de l'entraxe dZ d'une part et de l'écart angulaire dA d'autre part, et l'on compare, au moyen du calculateur 50, le point de fonctionnement effectif (dZ, dA) ainsi mesuré au domaine autorisé DdA applicable, tel que défini par la loi de commande L40. On laisse libre la rotation des flasques 11, 12 si ledit point de fonctionnement (dZ, dA) se situe bien à l'intérieur du domaine autorisé DdA, et, dans le cas contraire, on déclenche l'assistance pour ramener le point de fonctionnement (dZ, dA) dans ledit domaine autorisé DdA, par exemple en activant un moteur M30 d'assistance à la rotation, comme il a été expliqué plus haut.

Dans le cas d'une loi de commande L40 mécanique, la rotation des flasques 11, 12 reste libre, entre les bords latéraux qui forment les profils de guidage 66, 67, 68, 69 de la rainure de guidage 61 (figures 12, 13), et plus particulièrement du second tronçon 61_2 de ladite rainure de guidage 61, tant qu'aucun des (ici deux) doigts 62, 63 du flasque 11, 12 concerné n'entre en contact avec l'un desdits profils, c'est-à-dire aussi longtemps que le flasque 11, 12 respecte spontanément le domaine autorisé. Si l'un des doigts 62, 63 du flasque entre en contact avec l'un des profils de guidage 66, 67, 68, 69, cela signifie que l'on a atteint une frontière du domaine autorisé DdA, et la rotation du flasque, et plus particulièrement sa déviation angulaire par unité de progression axiale, est alors contrainte par le tracé du profil de guidage 66, 67, 68, 69 qui forme une butée circonférentielle à l'encontre du doigt 62, 63.

A titre d'exemple, si le second doigt 63 entre en contact avec le troisième profil de guidage 68, ledit second doigt 63, et donc le flasque 11 et le premier doigt 62 avec lui, seront déviés angulairement, au fur et à mesure de leur avance axiale, en quittant ainsi le premier profil de guidage 66, correspondant à la configuration à plat, non radialisée, et jusqu'à venir buter contre le second profil de guidage 67, correspondant à la configuration torique, radialisée.

Que l'on utilise une loi de commande L40 électronique ou mécanique, on poursuit ainsi le rapprochement axial des flasques 11, 12, en parcourant le premier domaine d'application DI sur toute sa longueur, et en déclenchant éventuellement l'assistance, si nécessaire, et seulement tant que ladite assistance est nécessaire.

De la sorte, on finit par parvenir à la configuration finale, caractérisée par le point de fonctionnement final (dZ_final, dA_final), et dans laquelle le bandage 2 présente la forme torique souhaitée, avec les fils de renfort des flancs convenablement radialisés.

De préférence, on fige alors l'écart angulaire dA des flasques 11, 12, en activant la seconde fonction de blocage F_lock_2 si la loi de commande L40 est électronique, ou automatiquement du fait que le second doigt 63, 65 du flasque 11, 12 s'est engagé dans le troisième tronçon 61_3 dans le cas de l'utilisation d'un guide 60 mécanique, troisième tronçon 61_3 qui, comme le premier tronçon 61_1, présente une largeur juste nécessaire et suffisante, au jeu de glissement près, pour bloquer la rotation du doigt 63 concerné dans les deux sens (horaire et anti-horaire) et n'autoriser que la translation dudit doigt (figures 14, 15).

On peut alors procéder à la pose du bloc sommet sur le bloc carcasse, puis au déploiement des bras 20 porteurs des roulettes 22, et ainsi au rouletage des flancs (figures 16, 17, 18).

Le système de commande 40, et plus particulièrement le calculateur 50, pourra à ce titre faire appel à tout mécanisme de déploiement 23 approprié, par exemple un vérin annulaire embarqué sur le flasque 11, 12 et qui pousse la couronne 24, 25 pour la faire coulisser le long dudit flasque 11, 12, ou bien encore en poursuivant le mouvement axial du second doigt 63, 65 associé au flasque 11, 12, dans le prolongement du troisième tronçon 61_3 de la rainure de guidage 61 (figure 17), afin de déplacer la couronne 24, 25.

Une fois le bandage 2 cru terminé, on pourra rétracter les bras 2, puis ramener les flasques 11, 12 en configuration initiale.

Dans le cas d'un guide mécanique 60, on effectuera sensiblement le même chemin au retour que celui effectué à l'aller pour la conformation, mais en sens inverse, et chaque flasque 11, 12 se retrouvera, par construction, dans une position axiale et dans une position angulaire identiques à celles que ledit flasque 11, 12 occupait avant la conformation.

Dans le cas d'une loi de commande L40 électronique, on pourra prévoir d'opérer simplement un recul axial des flasques 11, 12, de sorte à revenir à l'entraxe initial dZ_init, mais sans nécessairement revenir à la position angulaire initiale de chaque flasque, puisque l'on pourra réinitialiser arbitrairement la valeur de l'écart angulaire dA mesuré, et donc considérer la position angulaire occupée par les flasques 11, 12 au terme du cycle de conformation précédent comme étant la nouvelle origine angulaire du prochain cycle de conformation.

## Revendications

1. Dispositif (1) de conformation de bandage (2) comprenant un premier flasque (11) destiné à recevoir un premier talon (3) d'un bandage (2), un second flasque (12) destiné à recevoir un second talon (4) dudit bandage (2), un mécanisme de translation (13) permettant de déplacer le premier flasque (11) et/ou le second flasque (12) en translation le long d'un axe central (Z10) commun afin de modifier la distance dite « entraxe » (dZ) qui sépare axialement le premier flasque (11) du second flasque (12), de manière à pouvoir rapprocher axialement les flasques (11, 12) l'un de l'autre, et donc les talons (3, 4) l'un de l'autre, pour accompagner une expansion radiale du bandage (2), un mécanisme de rotation (30) qui permet une rotation du premier flasque (11) et/ou du second flasque (12) autour de l'axe central (Z10) de sorte à permettre une modification de la position angulaire azimutale relative (dA) du premier flasque (11) par rapport au second flasque (12), dite « écart angulaire » (dA), ledit dispositif (1) étant **caractérisé en ce qu'**il comprend un système de commande (40) agencé pour appliquer une loi de commande (L40) qui comprend un mode de fonctionnement dit « mode d'assistance conditionnelle », selon lequel i) sur une première plage d'entraxes prédéterminée, dite « premier domaine d'application » (DI), la loi de commande (L40) associe, à chaque valeur d'entraxe (dZ) dudit premier domaine d'application (DI), une plage d'écarts angulaires autorisés, dite « domaine autorisé » (DdA), qui possède une amplitude (H_DdA) prédéterminée délimitée par une frontière basse (DdA_min) et une frontière haute (DdA_max) distincte de la frontière basse (DdA_min), et selon lequel ii) lorsque l'on opère un rapprochement axial mutuel des flasques (11, 12) et que l'entraxe (dZ) passe ainsi par le premier domaine d'application (DI), le mécanisme de rotation (30) reste passif si l'écart angulaire (dA) se trouve à l'intérieur du domaine autorisé (DdA), de manière à laisser le premier flasque (11) et le second flasque (12) à même d'opérer une libre rotation relative l'un par rapport à l'autre sous l'effet de la réaction naturelle du bandage (2) à l'expansion radiale dudit bandage (2) et au rapprochement axial mutuel desdits flasques (11, 12), et ledit mécanisme de rotation (30) déclenche sélectivement une assistance à la rotation si l'écart angulaire (dA) atteint l'une des frontières (DdA_min, DdA_max) du domaine autorisé (DdA) ou sort dudit domaine autorisé (DdA), afin de piloter activement la rotation relative des flasques (11, 12) de manière à forcer l'écart angulaire (dA) à se maintenir ou à revenir dans ledit domaine autorisé (DdA).

2. Dispositif selon la revendication 1 **caractérisé en ce que** l'amplitude (H_DdA) du domaine autorisé varie en fonction de l'entraxe (dZ).

3. Dispositif selon la revendication 1 ou 2 **caractérisé en ce que** le premier domaine d'application (DI) couvre au moins 50%, de préférence au moins 75%, voire au moins 90% de l'intervalle d'entraxe total (D_tot) que décrit l'entraxe (dZ) lors de la course axiale totale des flasques (11, 12) qui est nécessaire pour faire passer le bandage (2) d'une configuration initiale, sensiblement cylindrique, à une configuration finale, correspondant à la forme torique souhaitée.

4. Dispositif selon l'une des revendications précédentes **caractérisé en ce que** le domaine autorisé (DdA) défini par la loi de commande (L40) présente une amplitude (H_DdA) qui croît tout d'abord tandis que l'entraxe (dZ) diminue, sur une première portion (DI_1) du premier domaine d'application (DI) qui est située vers, et de préférence qui inclut, l'entraxe initial (dZ_init) qui correspond à la configuration initiale du bandage (2), sensiblement cylindrique, puis qui décroît sur une seconde portion (DI_2) du premier domaine d'application (DI), qui est située vers, voire qui inclut, l'entraxe final (dZ_final) qui correspond à la configuration finale, torique, du bandage (2), de manière à faire converger l'écart angulaire (dA) vers un écart angulaire final (dA_final) cible qui correspond à l'écart angulaire que l'on souhaite obtenir en configuration finale.

5. Dispositif selon l'une des revendications précédentes **caractérisé en ce que** la loi de commande (L40) comprend au moins une fonction de blocage en rotation, et de préférence comprend les deux fonctions de blocage en rotation, parmi : i) une première fonction de blocage en rotation (F_lock_1) qui permet de bloquer la rotation relative des flasques (11, 12) dans une configuration initiale, correspondant à une valeur initiale d'entraxe (dZ_init) ou une plage de valeurs d'entraxe (D_lock_init) qui précède le premier domaine d'application (DI), et dans laquelle le bandage (2) présente une forme cylindrique, avant l'opération de conformation, et ii) une seconde fonction de blocage en rotation (F_lock_2) qui permet de bloquer la rotation relative des flasques (11, 12) dans une configuration finale, correspondant à une valeur finale d'entraxe (dZ_final) ou une plage de valeurs d'entraxe (D_lock_final) qui suit le premier domaine d'application (DI), et dans laquelle le bandage (2) présente une forme torique souhaitée, à l'issue de l'opération de conformation.

6. Dispositif selon l'une des revendications précédentes **caractérisé en ce que** la loi de commande (L40) se présente sous forme électronique, de préférence sous forme d'un ensemble de données numériques tel qu'une formule mathématique, une cartographie, un abaque ou un tableau, et est mise à disposition d'un calculateur (50) du système de commande (40) qui pilote un ou plusieurs moteurs (M13, M30) actionnant le mécanisme de translation (13) et le mécanisme de rotation (30).

7. Dispositif selon l'une des revendications 1 à 5 **caractérisé en ce que** la loi de commande (L40) est matérialisée par un guide (60) mécanique qui comprend une rainure de guidage (61) dans laquelle est engagé un doigt (62, 63, 64, 65) fixé à l'un des flasques (11, 12), rainure de guidage (61) dont les bords latéraux forment, à l'encontre dudit doigt (62, 63, 64, 65), des profils de guidage (66, 67, 68, 69) qui autorisent un déplacement axial dudit doigt (62, 63, 64, 65) lors des modifications de l'entraxe (dZ) tout en matérialisant en azimut autour de l'axe central (Z10) les frontières (DdA_min, DdA_max) du domaine autorisé (DdA), de sorte d'une part à offrir audit doigt (62, 63, 64, 65), et donc au flasque (11, 12) correspondant, dans chacune des positions axiales dudit doigt (62, 63, 64, 65), et donc dudit flasque (11, 12), un débattement angulaire (RA) qui correspond à l'amplitude (H_DdA) du domaine autorisé pour la position axiale considérée, et d'autre part à contenir ledit doigt (62, 63, 64, 65) dans le domaine autorisé (DdA) en formant des butées circonférentielles à l'encontre de la rotation azimutale du doigt (62, 63, 64, 65), et donc du flasque (11, 12) correspondant, lorsque ledit doigt (62, 63, 64, 65) atteint une position azimutale qui correspond à l'une des frontières (DdA_min, DdA_max) dudit domaine autorisé.

8. Dispositif selon la revendication 7 **caractérisé en ce que** la rainure de guidage (61) présente axialement une succession de plusieurs tronçons (61_1, 61_2, 61_3) comprenant, dans le sens correspondant au sens de rapprochement axial des flasques (11, 12) : un premier tronçon (61_1) formant un tronçon de blocage, au sein duquel le doigt (62, 63, 64, 65) et donc le flasque (11, 12) correspondant sont bloqués en rotation, dans une première position angulaire dite « position angulaire initiale », qui correspond à une configuration initiale dans laquelle le bandage (2) présente une forme sensiblement cylindrique, puis un second tronçon (61_2) formant un tronçon de libération, au sein duquel le doigt (62, 63, 64, 65) et donc le flasque (11, 12) sont libres en rotation sur un débattement angulaire (RA) correspondant à celui prévu par l'amplitude du domaine autorisé (H_DdA), puis un troisième tronçon (61_3) formant un autre tronçon de blocage au sein duquel le doigt (62, 63, 64, 65) et donc le flasque (11, 12) sont bloqués en rotation dans une seconde position angulaire différente de la première, et dite « position angulaire finale », qui correspond à une configuration finale dans laquelle le bandage (2) présente la forme torique souhaitée.

9. Dispositif selon l'une des revendications précédentes **caractérisé en ce que** l'amplitude (H_DdA) du domaine autorisé offre aux flasques (11, 12) un débattement angulaire relatif, et donc un écart angulaire (dA) possible, qui atteint au moins 2 degrés, voire au moins 5 degrés, et qui, de préférence, est également inférieur à 30 degrés, voire inférieur à 15 degrés.

10. Procédé de conformation d'un bandage (2) comprenant une étape de rapprochement au cours de laquelle on rapproche axialement l'un de l'autre un premier flasque (11) portant un premier talon (3) du bandage (2) et un second flasque (12) portant un second talon (4) dudit bandage afin de modifier la distance séparant axialement lesdits flasques, dite « entraxe » (dZ), pour faire passer ledit bandage (2) d'une configuration initiale sensiblement cylindrique à une configuration finale torique, ledit procédé étant **caractérisé en ce que**, au cours de l'étape de rapprochement axial, on mesure la position angulaire azimutale relative du premier flasque (11) par rapport au second flasque (12), dite « écart angulaire » (dA), et on contrôle la rotation du premier flasque (11) et/ou du second flasque (12) autour de l'axe central (Z10) commun auxdits flasques en mettant en œuvre une loi de commande (L40) qui comprend un mode d'assistance conditionnelle selon lequel, sur une première plage d'entraxes prédéterminée, dite « premier domaine d'application » (DI), la loi de commande (L40) associe à chaque valeur d'entraxe (dZ) dudit premier domaine d'application (DI) une plage d'écarts angulaires autorisés, dite « domaine autorisé » (DdA), qui possède une amplitude (H_DdA) prédéterminée délimitée par une frontière basse (DdA_min) et une frontière haute (DdA_max), puis selon lequel, si l'écart angulaire (dA) mesuré se trouve à l'intérieur du domaine autorisé (DdA), on laisse le premier flasque et le second flasque (11, 12) opérer une libre rotation relative l'un par rapport à l'autre sous l'effet de la réaction naturelle du bandage (2) à l'expansion radiale dudit bandage et au rapprochement axial mutuel desdits flasques (11, 12), et, si l'écart angulaire (dA) mesuré atteint l'une des frontières (DdA_min, DdA_max) du domaine autorisé ou sort dudit domaine autorisé (DdA), on déclenche sélectivement une assistance à la rotation afin de piloter activement la rotation relative des flasques (11, 12) de manière à forcer l'écart angulaire (dA) mesuré à se maintenir ou à revenir dans ledit domaine autorisé (DdA).

11. Procédé selon la revendication 10 **caractérisé en ce que** la loi de commande (L40) est programmée sous une forme électronique, de préférence sous la forme de données numériques, pour permettre un pilotage électronique d'un ou plusieurs moteurs (M30) actionnant le premier et/ou le second flasque (11, 12) en rotation.

12. Procédé selon la revendication 10 **caractérisé en ce que** la loi de commande (L40) est mise en œuvre au moyen d'un guide (60) mécanique pourvu d'une rainure de guidage (61) qui coopère avec un doigt (62, 63, 64, 65) fixé à l'un des flasques (11, 12).

## Patentansprüche

1. Vorrichtung (1) zur Formung eines Luftreifens (2), beinhaltend einen ersten Flansch (11), der dazu bestimmt ist, einen ersten Wulst (3) eines Luftreifens (2) aufzunehmen, einen zweiten Flansch (12), der dazu bestimmt ist, einen zweiten Wulst (4) des Luftreifens (2) aufzunehmen, einen Translationsmechanismus (13), der es gestattet, den ersten Flansch (11) und/oder den zweiten Flansch (12) translatorisch entlang einer gemeinsamen Mittelachse (Z10) zu verschieben, um die Entfernung, die als "Mittenabstand" (dZ) bezeichnet wird und den ersten Flansch (11) axial von dem zweiten Flansch (12) trennt, zu verändern, um die Flansche (11, 12), und somit die Wülste (3, 4), axial einander annähern zu können, um eine radiale Aufweitung des Luftreifens (2) zu begleiten, einen Drehmechanismus (30), der eine Drehung des ersten Flansches (11) und/oder des zweiten Flansches (12) um die Mittelachse (Z10) gestattet, um eine Veränderung der relativen azimutalen Winkelposition (dA) des ersten Flansches (11) mit Bezug auf den zweiten Flansch (12), als "Winkelabweichung" (dA) bezeichnet, zu gestatten, wobei die Vorrichtung (1) **dadurch gekennzeichnet ist, dass** sie ein Steuerungssystem (40) beinhaltet, das dazu eingerichtet ist, ein Steuerungsgesetz (L40) anzuwenden, das einen Betriebsmodus, der als "Modus mit bedingter Unterstützung" bezeichnet wird, beinhaltet, gemäß dem i) in einem ersten vorbestimmten Mittenabstandsbereich, als "erste Anwendungsdomäne" (DI) bezeichnet, das Steuerungsgesetz (L40) jedem Mittenabstandswert (dZ) der ersten Anwendungsdomäne (DI) einen Bereich zulässiger Winkelabweichungen, als "zulässige Domäne" (DdA) bezeichnet, zuordnet, welcher eine vorbestimmte Amplitude (H_DdA) besitzt, die durch eine Untergrenze (DAA_min) und eine Obergrenze (DdA_max), die sich von der Untergrenze (DdA_min) unterscheidet, begrenzt wird, und gemäß dem ii), wenn eine gegenseitige axiale Annäherung der Flansche (11, 12) ausgeübt wird und der Mittenabstand (dZ) auf diese Weise durch die erste Anwendungsdomäne (DI) verläuft, der Drehmechanismus (30) passiv bleibt, wenn sich die Winkelabweichung (dA) innerhalb der zulässigen Domäne (DdA) befindet, um den ersten Flansch (11) und den zweiten Flansch (12) in die Lage zu versetzen, unter dem Einfluss der natürlichen Reaktion des Luftreifens (2) auf die radiale Aufweitung des Luftreifens (2) und auf die gegenseitige axiale Annäherung der Flansche (11, 12) eine freie Drehung relativ zueinander auszuüben, und der Drehmechanismus (30) selektiv eine Unterstützung der Drehung auslöst, wenn die Winkelabweichung (dA) eine der Grenzen (DdA_min, DdA_max) der zulässigen Domäne (DdA) erreicht oder die zulässige Domäne (DdA) verlässt, um die relative Drehung der Flansche (11, 12) aktiv anzusteuern, um zu erzwingen, dass die Winkelabweichung (dA) in der zulässigen Domäne (DdA) bleibt oder in diese zurückkehrt.

2. Vorrichtung nach Anspruch 1, **dadurch gekennzeichnet, dass** die Amplitude (H_DdA) der zulässigen Domäne in Abhängigkeit von dem Mittenabstand (dZ) variiert.

3. Vorrichtung nach Anspruch 1 oder 2, **dadurch gekennzeichnet, dass** die erste Anwendungsdomäne (DI) mindestens 50 %, vorzugsweise mindestens 75 %, sogar mindestens 90 % des gesamten Mittenabstandsintervalls (D_tot) abdeckt, welches der Mittenabstand (dZ) während des axialen Gesamtweges der Flansche (11, 12) beschreibt, der notwendig ist, um den Luftreifen (2) von einer anfänglichen, im Wesentlichen zylindrischen Konfiguration in eine endgültige Konfiguration, die der gewünschten torischen Form entspricht, übergehen zu lassen.

4. Vorrichtung nach einem der vorhergehenden Ansprüche, **dadurch gekennzeichnet, dass** die zulässige Domäne (DdA), die durch das Steuerungsgesetz (L40) definiert wird, eine Amplitude (H_DdA) aufweist, die bei sich verringerndem Mittenabstand (dZ) über einen ersten Abschnitt (DI_1) der ersten Anwendungsdomäne (DI), der in Richtung des anfänglichen Mittenabstands (dZ_init), der der anfänglichen, im Wesentlichen zylindrischen Konfiguration des Luftreifens (2) entspricht, liegt und diesen vorzugsweise einschließt, zunächst zunimmt und dann über einen zweiten Abschnitt (DI_2) der ersten Anwendungsdomäne (DI), der in Richtung des endgültigen Mittenabstands (dZ_final), der der endgültigen, torischen Konfiguration des Luftreifens (2) entspricht, liegt und diesen vorzugsweise einschließt, abnimmt, um die Winkelabweichung (dA) zu einer endgültigen Sollwinkelabweichung (dA_final) konvergieren zu lassen, die der Winkelabweichung entspricht, die bei der endgültigen Konfiguration erhalten werden soll.

5. Vorrichtung nach einem der vorhergehenden Ansprüche, **dadurch gekennzeichnet, dass** das Steuerungsgesetz (L40) mindestens eine Drehblockierungsfunktion und vorzugsweise beide der folgenden Drehblockierungsfunktionen beinhaltet: i) eine erste Drehblockierungsfunktion (F_lock_1), die es gestattet, vor dem Formvorgang die relative Drehung der Flansche (11, 12) in einer anfänglichen Konfiguration zu blockieren, die einem anfänglichen Mittenabstandswert (dZ_init) oder einem Bereich von Mittenabstandswerten (D_lock_init), der der ersten Anwendungsdomäne (DI) vorausgeht, entspricht und in der der Luftreifen (2) eine zylindrische Form aufweist, und ii) eine zweite Drehblockierungsfunktion (F_lock_2), die es gestattet, nach Abschluss des Formvorgangs die relative Drehung der Flansche (11, 12) in einer endgültigen Konfiguration zu blockieren, die einem endgültigen Mittenabstandswert (dZ_final) oder einem Bereich von Mittenabstandswerten (D_lock_final), der der ersten Anwendungsdomäne (DI) folgt, entspricht und in der der Luftreifen (2) eine gewünschte torische Form aufweist.

6. Vorrichtung nach einem der vorhergehenden Ansprüche, **dadurch gekennzeichnet, dass** das Steuerungsgesetz (L40) in elektronischer Form, vorzugsweise in Form eines digitalen Datensatzes, wie etwa einer mathematischen Formel, einer Kartographie, einem Nomogramm oder einer Tabelle, vorliegt und einem Rechner (50) des Steuerungssystems (40) zur Verfügung gestellt wird, der einen oder mehrere Motoren (M13, M30) ansteuert, die den Translationsmechanismus (13) und den Drehmechanismus (30) betätigen.

7. Vorrichtung nach einem der Ansprüche 1 bis 5, **dadurch gekennzeichnet, dass** das Steuerungsgesetz (L40) durch eine mechanische Führung (60) verwirklicht wird, die eine Führungsnut (61) beinhaltet, in die ein Finger (62, 63, 64, 65), der an einem der Flansche (11, 12) befestigt ist, eingreift, wobei die Seitenränder der Führungsnut (61) mit Bezug auf den Finger (62, 63, 64, 65) Führungsprofile (66, 67, 68, 69) bilden, die während der Veränderungen des Mittenabstands (dZ) eine axiale Verschiebung des Fingers (62, 63, 64, 65) zulassen und dabei die Grenzen (DdA_min, DdA_max) der zulässigen Domäne (DdA) azimutal um die Mittelachse (Z10) herum verwirklichen, um so einerseits dem Finger (62, 63, 64, 65), und somit dem entsprechenden Flansch (11, 12), in jeder der axialen Positionen des Fingers (62, 63, 64, 65), und somit des Flansches (11, 12), eine Winkelverlagerung (RA) zu ermöglichen, die der Amplitude (H_DdA) der zulässigen Domäne für die betrachtete axiale Position entspricht, und andererseits durch die Bildung von Umfangsanschlägen in Bezug auf die azimutale Drehung des Fingers (62, 63, 64, 65), und somit des entsprechenden Flansches (11, 12), den Finger (62, 63, 64, 65) in der zulässigen Domäne (DdA) zu halten, wenn der Finger (62, 63, 64, 65) eine azimutale Position erreicht, die einer der Grenzen (DdA_min, DdA_max) der zulässigen Domäne entspricht.

8. Vorrichtung nach Anspruch 7, **dadurch gekennzeichnet, dass** die Führungsnut (61) axial eine Folge mehrerer Teilabschnitte (61_1, 61_2, 61_3) aufweist, die in der Richtung, die der axialen Annäherungsrichtung der Flansche (11, 12) entspricht, Folgendes beinhaltet: einen ersten Teilabschnitt (61_1), der einen Blockierungsteilabschnitt bildet, innerhalb dessen der Finger (62, 63, 64, 65) und somit der entsprechende Flansch (11, 12) in einer ersten Winkelposition drehblockiert werden, die als "anfängliche Winkelposition" bezeichnet wird und die einer anfänglichen Konfiguration entspricht, in der der Luftreifen (2) eine im Wesentlichen zylindrische Form aufweist, dann einen zweiten Teilabschnitt (61_2), der einen Freisetzungsteilabschnitt bildet, innerhalb dessen der Finger (62, 63, 64, 65) und somit der Flansch (11, 12) über eine Winkelverlagerung (RA), die der durch die Amplitude der zulässigen Domäne (H_DdA) vorgesehenen entspricht, frei drehen können, dann einen dritten Teilabschnitt (61_3), der einen weiteren Blockierungsteilabschnitt bildet, innerhalb dessen der Finger (62, 63, 64, 65) und somit der Flansch (11, 12) in einer zweiten Winkelposition, die sich von der ersten unterscheidet, drehblockiert werden, die als "endgültige Winkelposition" bezeichnet wird und die einer endgültigen Konfiguration entspricht, in der der Luftreifen (2) die gewünschte torische Form aufweist.

9. Vorrichtung nach einem der vorhergehenden Ansprüche, **dadurch gekennzeichnet, dass** die Amplitude (H_DdA) der zulässigen Domäne den Flanschen (11, 12) eine relative Winkelverlagerung und somit eine mögliche Winkelabweichung (dA) ermöglicht, die mindestens 2 Grad, sogar mindestens 5 Grad erreicht und die vorzugsweise auch kleiner als 30 Grad, sogar kleiner als 15 Grad ist.

10. Verfahren zur Formung eines Luftreifens (2), beinhaltend einen Schritt des Annäherns, während dessen ein erster Flansch (11), der einen ersten Wulst (3) des Luftreifens (2) trägt, und ein zweiter Flansch (12), der einen zweiten Wulst (4) des Luftreifens trägt, einander axial angenähert werden, um die Entfernung, die die Flansche axial trennt und die als "Mittenabstand" (dZ) bezeichnet wird, zu verändern, um den Luftreifen (2) von einer anfänglichen, im Wesentlichen zylindrischen Konfiguration in eine endgültige, torische Konfiguration übergehen zu lassen, wobei das Verfahren **dadurch gekennzeichnet ist, dass** während des Schritts des axialen Annäherns die relative azimutale Winkelposition des ersten Flansches (11) mit Bezug auf den zweiten Flansch (12), als "Winkelabweichung" (dA) bezeichnet, gemessen wird und die Drehung des ersten Flansches (11) und/oder des zweiten Flansches (12) um die gemeinsame Mittelachse (Z10) der Flansche durch Umsetzung eines Steuerungsgesetzes (L40) gesteuert wird, das einen Modus mit bedingter Unterstützung beinhaltet, gemäß dem in einem ersten vorbestimmten Mittenabstandsbereich, als "erste Anwendungsdomäne" (DI) bezeichnet, das Steuerungsgesetz (L40) jedem Mittenabstandswert (dZ) der ersten Anwendungsdomäne (DI) einen Bereich zulässiger Winkelabweichungen, als "zulässige Domäne" (DdA) bezeichnet, zuordnet, welcher eine vorbestimmte Amplitude (H_DdA) besitzt, die durch eine Untergrenze (DdA_min) und eine Obergrenze (DdA_max) begrenzt wird, und gemäß dem dann, wenn sich die gemessene Winkelabweichung (dA) innerhalb der zulässigen Domäne (DdA) befindet, man den ersten Flansch und den zweiten Flansch (11, 12) unter dem Einfluss der natürlichen Reaktion des Luftreifens (2) auf die radiale Aufweitung des Luftreifens und auf die gegenseitige axiale Annäherung der Flansche (11, 12) eine freie Drehung relativ zueinander ausüben lässt und dann, wenn die gemessene Winkelabweichung (dA) eine der Grenzen (DdA_min, DdA_max) der zulässigen Domäne erreicht oder die zulässige Domäne (DdA) verlässt, selektiv eine Unterstützung der Drehung ausgelöst wird, um die relative Drehung der Flansche (11, 12) aktiv anzusteuern, um zu erzwingen, dass die gemessene Winkelabweichung (dA) in der zulässigen Domäne (DdA) bleibt oder in diese zurückkehrt.

11. Verfahren nach Anspruch 10, **dadurch gekennzeichnet, dass** das Steuerungsgesetz (L40) in elektronischer Form, vorzugsweise in Form digitaler Daten, programmiert ist, um eine elektronische Ansteuerung eines oder mehrerer Motoren (M30), die den ersten und/oder den zweiten Flansch (11, 12) drehbetätigen, zu gestatten.

12. Verfahren nach Anspruch 10, **dadurch gekennzeichnet, dass** das Steuerungsgesetz (L40) mittels einer mechanischen Führung (60) umgesetzt wird, die über eine Führungsnut (61) verfügt, die mit einem Finger (62, 63, 64, 65), der an einem der Flansche (11, 12) befestigt ist, zusammenwirkt.

## Claims

1. Device (1) for shaping a tyre (2), comprising a first flange (11) intended to receive a first bead (3) of a tyre (2); a second flange (12) intended to receive a second bead (4) of said tyre (2); a translation mechanism (13) allowing movement of the first flange (11) and/or the second flange (12) in translation along a common central axis (Z10) in order to modify the so-called "centre distance" (dZ) which axially separates the first flange (11) from the second flange (12), so that the flanges (11, 12) can be brought axially closer together and hence the beads (3, 4) closer together, to accompany a radial expansion of the tyre (2); a rotation mechanism (30) which allows rotation of the first flange (11) and/or the second flange (12) around the central axis (Z10) so as to allow modification of the relative azimuthal angular position (dA) of the first flange (11) relative to the second flange (12), called the "angular difference" (dA); said device (1) being **characterized in that** it comprises a control system (40) configured to apply a control law (L40) which comprises a function mode called "conditional assistance mode" in which i) over a first predetermined centre distance range called the "first application region" (DI), the control law (L40) associates with each centre distance value (dZ) of said first application region (DI) a range of permitted angular differences, called the "permitted region" (DdA), which has a predetermined amplitude (H_DdA) delimited by a low boundary (DdA_min) and a high boundary (DdA_max) separate from the low boundary (DdA_min); and in which ii) when a mutual axial convergence of the flanges (11, 12) is performed and the centre distance (dZ) thus passes through the first application region (DI), the rotation mechanism (30) remains passive if the angular difference (dA) lies inside the permitted region (DdA), so as to allow the first flange (11) and the second flange (12) to rotate freely relative to one another under the effect of the natural reaction of the tyre (2) to the radial expansion of said tyre (2) and to the mutual axial convergence of said flanges (11, 12), and said rotation mechanism (30) selectively triggers an assistance with rotation if the angular difference (dA) reaches one of the boundaries (DdA_min, DdA_max) of the permitted region (DdA) or leaves said permitted region (DdA), in order to actively manage the relative rotation of the flanges (11, 12) so as to force the angular difference (dA) to remain in or return within said permitted region (DdA).

2. Device according to Claim 1, **characterized in that** the amplitude (H_DdA) of the permitted region varies as a function of the centre distance (dZ).

3. Device according to Claim 1 or 2, **characterized in that** the first application region (DI) covers at least 50%, preferably at least 75%, even at least 90% of the total centre distance interval (D_tot) described by the centre distance (dZ) during the total axial travel of the flanges (11, 12) which is necessary to cause the tyre (2) to pass from an initial substantially cylindrical configuration to a final configuration corresponding to the desired toroidal form.

4. Device according to any of the preceding claims, **characterized in that** the permitted region (DdA) defined by the control law (L40) has an amplitude (H_DdA) which firstly increases while the centre distance (dZ) reduces over a first portion (DI_1) of the first application region (DI), which is situated towards and preferably includes the initial centre distance (dZ_init) corresponding to the initial substantially cylindrical configuration of the tyre (2), then which decreases over a second portion (DI_2) of the first application region (DI) which is situated towards or even includes the final centre distance (dZ_final) corresponding to the final toroidal configuration of the tyre (2), such that the angular difference (dA) converges towards a target final angular difference (dA _final) corresponding to the desired angular difference in the final configuration.

5. Device according to any of the preceding claims, **characterized in that** the control law (L40) comprises at least one rotational blocking function and preferably comprises two rotational blocking functions, selected from: i) a first rotational blocking function (F_lock_1) which allows blocking of the relative rotation of the flanges (11, 12) in an initial configuration corresponding to an initial centre distance value (dZ_init) or a range of centre distance values (D_lock_init) which precedes the first application region (DI) and in which the tyre (2) has a cylindrical form before the shaping operation, and ii) a second rotational blocking function (F_lock_2) which allows blocking of the relative rotation of the flanges (11, 12) in a final configuration corresponding to a final centre distance value (dZ_final) or a range of centre distance values (D_lock_final) which follows the first application region (DI), and in which the tyre (2) has a desired toroidal form after completion of the shaping operation.

6. Device according to any of the preceding claims, **characterized in that** the control law (L40) takes an electronic form, preferably the form of a set of numerical data such as a mathematical formula, a map, a chart or a table, and is made available to a computer (50) of the control system (40) which manages one or more motors (M13, M30) actuating the translation mechanism (13) and the rotation mechanism (30).

7. Device according to any of Claims 1 to 5, **characterized in that** the control law (L40) is realized as a mechanical guide (60) comprising a guide groove (61) holding by engagement a finger (62, 63, 64, 65) fixed to one of the flanges (11, 12), the side edges of which guide groove (61) form, against said finger (62, 63, 64, 65), guide profiles (66, 67, 68, 69) allowing an axial movement of said finger (62, 63, 64, 65) on modifications of the centre distance (dZ) while forming the boundaries (DdA_min, DdA_max) of the permitted region (DdA) in azimuth around the centre axis (Z10), so as firstly to offer said finger (62, 63, 64, 65) and hence the corresponding flange (11, 12), in each of the axial positions of said finger (62, 63, 64, 65) and hence of said flange (11, 12), an angular displacement (RA) which corresponds to the amplitude (H_DdA) of the permitted region for the axial position concerned, and secondly to retain said finger (62, 63, 64, 65) within the permitted region (DdA) by forming circumferential stops against the azimuthal rotation of the finger (62, 63, 64, 65) and hence of the corresponding flange (11, 12) when said finger (62, 63, 64, 65) reaches an azimuthal position which corresponds to one of the boundaries (DdA_min, DdA_max) of said permitted region.

8. Device according to Claim 7, **characterized in that** the guide groove (61) axially has a succession of multiple portions (61_1, 61_2, 61_3) comprising, in the direction corresponding to the direction of axial convergence of the flanges (11, 12): a first portion (61_1) forming a blocking portion, within which the finger (62, 63, 64, 65) and hence the corresponding flange (11, 12) are blocked in rotation in a first angular position called the "initial angular position" which corresponds to an initial configuration in which the tyre (2) has a substantially cylindrical form; then a second portion (61_2) forming a release portion within which the finger (62, 63, 64, 65) and hence the flange (11, 12) are free in rotation over an angular displacement (RA) corresponding to that provided by the amplitude of the permitted region (H_DdA); then a third portion (61_3) forming another blocking portion within which the finger (62, 63, 64, 65) and hence the flange (11, 12) are blocked in rotation in a second angular position different from the first, called the "final angular position" which corresponds to a final configuration in which the tyre (2) has the desired toroidal form.

9. Device according to any of the preceding claims, **characterized in that** the amplitude (H_DdA) of the permitted region offers the flanges (11, 12) a relative angular displacement and hence a possible angular difference (dA) which amounts to at least 2 degrees, even at least 5 degrees, and which preferably is also less than 30 degrees, even less than 15 degrees.

10. Method for shaping a tyre (2), comprising a convergence step during which a first flange (11) carrying a first bead (3) of the tyre (2) and a second flange (12) carrying a second bead (4) of said tyre (2) are brought axially closer together in order to modify the distance axially separating said flanges, called the "centre distance" (dZ), so that said tyre (2) passes from an initial substantially cylindrical configuration to a final toroidal configuration, said method being **characterized in that** during the step of axial convergence, the relative azimuthal angular position of the first flange (11) relative to the second flange (12), called the "angular difference" (dA), is measured, and the rotation of the first flange (11) and/or the second flange (12) around the central axis (Z10) common to said flanges is controlled by implementing a control law (L40) which comprises a conditional assistance mode in which, over a first predetermined centre distance range called the "first application region" (DI), the control law (L40) associates with each centre distance value (dZ) of said first application region (DI) a range of permitted angular differences, called the "permitted region" (DdA), which has a predetermined amplitude (H_DdA) delimited by a low boundary (DdA_min) and a high boundary (DdA_max); then in which, if the measured angular difference (dA) lies inside the permitted region (DdA), the first flange and the second flange (11, 12) are allowed to rotate freely relative to one another under the effect of the natural reaction of the tyre (2) to the radial expansion of said tyre and to the mutual axial convergence of said flanges (11, 12), and if the angular difference (dA) reaches one of the boundaries (DdA_min, DdA_ max) of the permitted region or leaves said permitted region (DdA), assistance with rotation is selectively triggered in order to actively manage the relative rotation of the flanges (11, 12) so as to force the measured angular difference (dA) to remain in or return within said permitted region (DdA).

11. Method according to Claim 10, **characterized in that** the control law (L40) is programmed in electronic form, preferably in the form of numerical data, to allow electronic management of one or more motors (M30) actuating the first and/or the second flange (11, 12) in rotation.

12. Method according to claim 10, **characterized in that** the control law (L40) is implemented by means of a mechanical guide (60) provided with a guide groove (61) which cooperates with a finger (62, 63, 64, 65) fixed to one of the flanges (11, 12).
